# EUROPEAN PATENT APPLICATION

(11) **EP 4 588 991 A1**
(43) Date of publication of application: **23.07.2025**
(21) Application number: 25152410.4
(22) Date of filing: 17.01.2025
(51) Int. Cl.: C09K 19/60, C09K 19/30

(54) **LIQUID-CRYSTALLINE MEDIUM**

(30) Priority: 18.01.2024 EP 24152603
(71) Applicant: Merck Patent GmbH, 64293 Darmstadt (DE)
(72) Inventor: Junge, Michael, 64293 Darmstadt (DE); Beyer, Andreas, 64293 Darmstadt (DE); Osterodt, Jens, 64293 Darmstadt (DE); Schmidt, Martin, 64293 Darmstadt (DE)
(74) Representative: Merck Patent Association

(57) **Abstract**

The present invention relates to liquid-crystalline media comprising one or more mesogenic compounds of formula I as set forth herein and one or more dichroic dyes, and to switching elements and window elements containing the LC materials. The present invention further relates to the use of the liquid-crystalline media in devices for regulating the passage of energy from an outside space into an inside space, for example in switchable windows for solar energy control in smart buildings and vehicles with energy efficiency and improved comfort.

## Description

The present invention relates to liquid-crystalline media comprising one or more mesogenic compounds of formula I as set forth hereinafter and one or more dichroic dyes, and to switching elements and window elements containing the liquid-crystalline media. The present invention further relates to the use of the liquid-crystalline media in devices for regulating the passage of energy from an outside space into an inside space, for example in switchable windows for solar energy control in smart buildings and vehicles with energy savings and improved comfort.

The review article by R. Baetens et al. "Properties, requirements and possibilities of smart windows for dynamic daylight and solar energy control in buildings: A state-of-the-art review", Solar Energy Materials & Solar Cells 94 (2010) pages 87-105 describes tintable smart windows. Smart windows can make use of several technologies for modulating the transmittance of light such as devices based on electrochromism, liquid crystal devices and electrophoretic or suspended-particle devices. Liquid crystal-based devices employ a change in the orientation of liquid crystal molecules between two conductive electrodes by applying an electric field which results in a change of their transmittance.

Optical intensity modulators such as light shutters can be based on liquid crystals (LCs). In principle, such light shutters may rely on the scattering of light or the absorption of light.

Liquid crystals are used in particular as dielectrics in display devices, wherein the optical properties of such materials can be influenced by an applied voltage. Electro-optical devices based on liquid crystals are well known in the art and can be based on various effects. Devices of this type are, for example, cells having dynamic scattering, DAP (deformation of aligned phases) cells, TN cells having a twisted nematic structure, STN ("supertwisted nematic") cells, SBE ("superbirefringence effect") cells, OMI ("optical mode interference") cells and guest-host cells.

Devices based on the guest-host effect were first described by Heilmeier and Zanoni (G. H. Heilmeier et al., Appl. Phys. Lett., 1968, 13, 91f.) and have since then found widespread use, principally in liquid crystal (LC) display elements. In a guest-host system, the LC medium comprises one or more dichroic dyes in addition to the liquid crystal. Owing to the directional dependence of the absorption by the dye molecules, the transmissivity of the dye-doped liquid crystal to light can be modulated when the dyes change their alignment together with the liquid crystal.

Besides the use in LC displays, devices of this type are also used as switching elements for regulating the passage of light or energy, as described for example in WO 2009/141295 and WO 2010/118422.

For the devices for regulating the passage of energy from an outside space into an inside space, a number of different technical solutions have been proposed.

In some devices the transmission of light can be reversibly changed, wherein the intensity of incident light can be attenuated, dimmed or tinted. Such devices may thus be operated in and switched between a bright state and a dark state, i.e. a state of relatively higher light transmission and a state of relatively lower light transmission.

In one of the possible modes for the devices, a liquid-crystalline medium in combination with one or more dichroic dyes as described above can be used in the switching layer(s). By application of a voltage, a change in the orientational alignment of the dichroic dye molecules can be achieved in these switching layers. Owing to the direction-dependent absorption, a change in the transmissivity of the switching layer can thus be obtained. A corresponding device is described, for example, in WO 2009/141295.

Alternatively, such a change in the transmission behaviour can also be achieved without electrical voltage by a temperature-induced transition from an isotropic state of the liquid-crystalline medium to a liquid-crystalline state, as described, for example, in US 2010/0259698.

WO 2009/141295 and WO 2010/118422 describe liquid-crystalline media for optical devices of the guest-host type which comprise cyanobiphenyl derivatives and one or more dichroic dyes. Rylene dyes have been described for use in the above-mentioned devices, for example in WO 2009/141295, WO 2013/004677 and WO2014/090373. The use of benzothiadiazoles in the above-mentioned devices is described in WO 2014/187529 and in WO 2020/104563, and the use of thiadiazoloquinoxalines in the above-mentioned devices is described in WO 2016/177449 and in WO 2020/104563.

There is still a need in the art for liquid-crystalline media with improved chemical, physical and electro-optical properties, in particular for use in switching elements and window elements. In particular, there is a need in the art for liquid-crystalline media comprising dichroic dye compounds which give benefits in terms of device performance and reliability. Furthermore, there is a need in the art for switchable devices, in particular for solar applications, which can provide effective dimming with a uniform appearance and which can have suitable reliability and stability.

An object of the present invention is therefore to provide improved liquid-crystalline media which exhibit broad and stable LC phase ranges, which are particularly suitable for guest-host type applications and which can favourably contribute to an effective and efficient performance of switchable devices.

It is a further object to provide a switching medium for electro-optical applications which allow a particularly beneficial performance in devices for regulating the passage of energy from an outside space into an inside space, in particular in smart switchable windows, e.g. in terms of the contrast, the appearance and phase behaviour, and the reliability and stability. Further objects of the present invention are immediately evident to the person skilled in the art from the following detailed description.

The objects are solved by the subject-matter defined in the independent claims, while preferred embodiments are set forth in the respective dependent claims and are further described below.

The present invention in particular provides the following items including main aspects, preferred embodiments and particular features, which respectively alone and in combination contribute to solving the above object and eventually provide additional advantages.

A first aspect of the present invention provides a liquid-crystalline medium, comprising
- one or more compounds of formula I 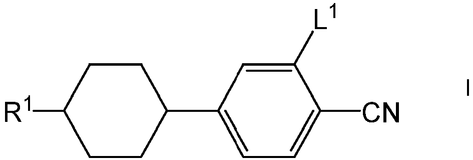 wherein
   - R¹: denotes a straight-chain alkyl having 8 to 20 C atoms, or a branched or cyclic alkyl having 3 to 20 C atoms, in particular a branched or cyclic alkyl having 8 to 20 C atoms, in which, in addition, one or more non-adjacent CH₂ groups may each be replaced, independently of one another, by O and in which, in addition, one or more H atoms may be replaced by F, Cl or Br, preferably straight-chain alkyl having 8 to 16 C atoms, more preferably straight-chain alkyl having 8 to 12 C atoms,
   and
   - L¹: denotes H, F, Cl or CH₃, preferably H or F, more preferably H,
   and
- one or more dichroic dyes,
   wherein the one or more dichroic dyes are contained in the medium in a total amount, based on the overall contents of the medium, of at least 1% by weight.

Preferably, the one or more dichroic dyes are contained in the medium in a total amount of 2% by weight or more, more preferably 3% by weight or more, even more preferably 4% by weight or more, still more preferably 5% by weight or more, and in particular 7.5% by weight or more.

It is preferred that the total concentration of the one or more dichroic dyes in the medium is in the range of 1.5% by weight to 20% by weight, more preferably 2.5% by weight to 15% by weight, even more preferably 3% by weight to 12.5% by weight, still more preferably 4% by weight to 10% by weight, and in particular 6% by weight to 8% by weight.

It has surprisingly been found that by including one or more compounds of formula I as described herein above and below in liquid-crystalline media which contain one or more dichroic dyes in an amount of at least 1% by weight and also in amounts which may be significantly higher, a modulation medium can be obtained which can give a beneficial performance in optical and electro-optical applications and in particular in the use of guest-host applications such as in dimmable smart windows.

In addition to giving suitable light and temperature stability, including low-temperature stability as well as stability at higher working temperatures, the medium according to the invention can favourably contribute to an effective and efficient device performance e.g. in terms of fast and uniform switching and a uniform appearance and a favourable aesthetic impression in the switching states as well as favourable reliability.

In some applications it can be desirable to provide a switching element which exhibits a high contrast between the bright state and the dark state and wherein optionally or in addition a very effective dark state with minimum transmission can be achieved. In this respect, the liquid-crystalline medium according to the invention can be beneficial in that a higher dye concentration may be used and/or in that a single switching layer may be sufficient and/or in that a smaller switching layer thickness or cell gap may be sufficient to obtain the desired contrast and an effective dark state.

It has thus been found that the liquid-crystalline media according to the invention can give a stable, reliable and highly effective switching medium for electro-optical applications.

Therefore, in a further aspect of the present invention a switching element is provided which comprises a switching layer comprising the liquid-crystalline medium as set forth herein above and below, wherein the switching layer is arranged between two substrates and wherein alignment layers are provided which are in direct contact with the liquid-crystalline medium.

It has been found that the media according to the invention and the switching elements comprising the media in the switching layer can give a beneficial performance in guest-host type applications, wherein the dye-doped mesogenic media can exhibit suitably broad and stable LC phase ranges and in particular favourable low-temperature stability.

The media and the switching elements according to the invention can thus give benefits in terms of the performance and the reliability in devices for regulating the passage of energy from an outside space into an inside space, in particular in dimmable smart windows.

In a further aspect a window element is therefore provided which comprises the liquid-crystalline medium according to the present invention or respectively the switching element according to the present invention as described herein.

The liquid crystal windows according to the invention can be used in sustainable glazing applications in buildings and vehicles, in particular by giving energy savings with respect to lighting, cooling and/or heating and by positively impacting the lifecycle e.g. in terms of maintenance, while in addition providing improved thermal and visual comfort.

Without limiting the present invention thereby, in the following the invention is illustrated by the detailed description of the aspects, embodiments and particular features, and particular embodiments are described in more detail.

The present invention describes devices for regulating the passage of energy from an outside space into an inside space, in particular devices which regulate the passage of energy, in particular light and especially sunlight, through an area which is arranged within a structure of relatively lower energy transmissivity. The structure of lower energy transmissivity can be a wall. The energy can thus for example pass through an open area or in particular a glass area in the wall. The devices are thus preferably arranged to be constituents of windows, for example insulated glazing units.

The regulated passage of energy takes place from an outside space, preferably the environment exposed to direct or indirect sunlight radiation, into an inside space, for example a building or a vehicle, or another unit which is substantially sealed off from the environment.

For the purposes of the present invention, the term energy is taken to mean in particular energy by electromagnetic radiation in the UV-A, VIS and NIR region. In particular, it is taken to mean energy by radiation which is not absorbed or is only absorbed to a negligible extent by the materials usually used in windows, for example glass. Herein, the UV-A region is taken to mean the wavelength range from 320 nm to 380 nm, the VIS region is taken to mean the wavelength range from 380 nm to 780 nm and the NIR region is taken to mean the wavelength range from 780 nm to 2000 nm. Correspondingly, the term light is generally taken to mean electromagnetic radiation having wavelengths between 320 and 2000 nm, and in particular from 380 nm to 780 nm.

Herein, a dichroic dye is taken to mean a light-absorbing compound in which the absorption properties are dependent on the orientation of the compound relative to the direction of polarisation of the light. A dichroic dye compound in accordance with the present invention typically has an elongated shape, i.e. the compound is significantly longer in one spatial direction, i.e. along the longitudinal axis, than in the other two spatial directions.

The term "organic group" denotes a carbon or hydrocarbon group.

The term "carbon group" denotes a mono- or polyvalent organic group containing at least one carbon atom, where this group either contains no further atoms, such as, for example, -C≡C-, or optionally contains one or more further atoms, such as, for example, N, O, S, P, Si, Se, As, Te or Ge, for example carbonyl, etc.. The term "hydrocarbon group" denotes a carbon group which additionally contains one or more H atoms and optionally one or more heteroatoms, such as, for example, N, O, S, P, Si, Se, As, Te or Ge.

"Halogen" denotes F, Cl, Br or I, preferably F or CI.

A carbon or hydrocarbon group can be a saturated group or an unsaturated group. Unsaturated groups are, for example, aryl, alkenyl or alkynyl groups. A carbon or hydrocarbon radical having 3 or more atoms can be straight-chain, branched and/or cyclic and may also contain spiro links or condensed rings.

The terms "alkyl", "aryl", "heteroaryl", etc., also encompass polyvalent groups, for example alkylene, arylene, heteroarylene, etc.

The term "aryl" denotes an aromatic carbon group or a group derived therefrom. The term "heteroaryl" denotes "aryl" as defined above, containing one or more heteroatoms.

Preferred carbon and hydrocarbon groups are optionally substituted alkyl, alkenyl, alkynyl, alkoxy, alkylcarbonyl, alkoxycarbonyl, alkylcarbonyloxy and alkoxycarbonyloxy having 1 to 40, preferably 1 to 25, particularly preferably 1 to 18, C atoms, optionally substituted aryl or aryloxy having 6 to 40, preferably 6 to 25, C atoms, or optionally substituted alkylaryl, arylalkyl, alkylaryloxy, arylalkyloxy, arylcarbonyl, aryloxycarbonyl, arylcarbonyloxy and aryloxycarbonyloxy having 6 to 40, preferably 6 to 25, C atoms.

Further preferred carbon and hydrocarbon groups are C₁-C₄₀ alkyl, C₂-C₄₀ alkenyl, C₂-C₄₀ alkynyl, C₃-C₄₀ allyl, C₄-C₄₀ alkyldienyl, C₄-C₄₀ polyenyl, C₆-C₄₀ aryl, C₆-C₄₀ alkylaryl, C₆-C₄₀ arylalkyl, C₆-C₄₀ alkylaryloxy, C₆-C₄₀ arylalkyloxy, C₂-C₄₀ heteroaryl, C₄-C₄₀ cycloalkyl, C₄-C₄₀ cycloalkenyl, etc. Particular preference is given to C₁-C₂₂ alkyl, C₂-C₂₂ alkenyl, C₂-C₂₂ alkynyl, C₃-C₂₂ allyl, C₄-C₂₂ alkyldienyl, C₆-C₁₂ aryl, C₆-C₂₀ arylalkyl and C₂-C₂₀ heteroaryl.

Further preferred carbon and hydrocarbon groups are straight-chain, branched or cyclic alkyl radicals having 1 to 40, preferably 1 to 25, C atoms, which are unsubstituted or mono- or polysubstituted by F, C!, Br, I or CN and in which one more non-adjacent CH₂ groups may each be replaced, independently of one another, by -C(R^{z})=C(R^{z})-, -C≡C-, -N(R^{z})-, -O-, -S-, -CO-, -CO-O-, -O-CO-, -O-CO-O- in such a way that O and/or S atoms are not linked directly to one another.

R^{z} preferably denotes H, halogen, a straight-chain, branched or cyclic alkyl chain having 1 to 25 C atoms, in which, in addition, one or more non-adjacent C atoms may be replaced by -O-, -S-, -CO-, -CO-O-, -O-CO- or -O-CO-O- and in which one or more H atoms may be replaced by fluorine, an optionally substituted aryl or aryloxy group having 6 to 40 C atoms, or an optionally substituted heteroaryl or heteroaryloxy group having 2 to 40 C atoms.

Preferred alkyl groups are, for example, methyl, ethyl, n-propyl, isopropyl, n-butyl, isobutyl, s-butyl, t-butyl, 2-methylbutyl, n-pentyl, s-pentyl, cyclopentyl, n-hexyl, cyclohexyl, 2-ethylhexyl, n-heptyl, cycloheptyl, n-octyl, cyclooctyl, n-nonyl, n-decyl, n-undecyl, n-dodecyl, trifluoromethyl, perfluoro-n-butyl, 2,2,2-trifluoroethyl, perfluorooctyl and perfluorohexyl.

Preferred alkenyl groups are, for example, ethenyl, propenyl, butenyl, pentenyl, cyclopentenyl, hexenyl, cyclohexenyl, heptenyl, cycloheptenyl, octenyl and cyclooctenyl.

Preferred alkynyl groups are, for example, ethynyl, propynyl, butynyl, pentynyl, hexynyl and octynyl.

Preferred alkoxy groups are, for example, methoxy, ethoxy, 2-methoxyethoxy, n-propoxy, i-propoxy, n-butoxy, i-butoxy, s-butoxy, t-butoxy, 2-methylbutoxy, n-pentoxy, n-hexoxy, n-heptoxy, n-octoxy, n-nonoxy, n-decoxy, n-undecoxy and n-dodecoxy.

Preferred amino groups are, for example, dimethylamino, methylamino, methylphenylamino and phenylamino.

Aryl and heteroaryl groups can be monocyclic or polycyclic, i.e. they can contain one ring, such as, for example, phenyl, or two or more rings, which may also be fused, such as, for example, naphthyl, or covalently bonded, such as, for example, biphenyl, or contain a combination of fused and linked rings. Heteroaryl groups contain one or more heteroatoms, preferably selected from O, N, S and Se. A ring system of this type may also contain individual non-conjugated units, as is the case, for example, in the fluorene basic structure.

Particular preference is given to mono-, bi- or polycyclic aryl groups having 6 to 50 C atoms and mono-, bi- or polycyclic heteroaryl groups having 5 to 50 C atoms, which optionally contain fused rings and are optionally substituted. Preference is furthermore given to 5-, 6- or 7-membered aryl and heteroaryl groups, in which, in addition, one or more CH groups may be replaced by N, S or O in such a way that O atoms and/or S atoms are not linked directly to one another.

Preferred aryl groups are derived, for example, from the parent structures benzene, biphenyl, terphenyl, [1,1':3',1"]terphenyl, naphthalene, anthracene, binaphthyl, phenanthrene, pyrene, dihydropyrene, chrysene, perylene, tetracene, pentacene, benzopyrene, fluorene, indene, indenofluorene, spirobifluorene, etc.

Preferred heteroaryl groups are, for example, 5-membered rings, such as pyrrole, pyrazole, imidazole, 1,2,3-triazole, 1,2,4-triazole, tetrazole, furan, thiophene, selenophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6-membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, isoindole, indolizine, indazole, benzimidazole, benzotriazole, purine, naphthimidazole, phenanthrimidazole, pyridimidazole, pyrazinimidazole, quinoxalinimidazole, benzoxazole, naphthoxazole, anthroxazole, phenanthroxazole, isoxazole, benzothiazole, benzofuran, isobenzofuran, dibenzofuran, quinoline, isoquinoline, pteridine, benzo-5,6-quinoline, benzo-6,7-quinoline, benzo-7,8-quinoline, benzoisoquinoline, acridine, phenothiazine, phenoxazine, benzopyridazine, benzopyrimidine, quinoxaline, phenazine, naphthyridine, azacarbazole, benzocarboline, phenanthridine, phenanthroline, thieno[2,3b]thiophene, thieno[3,2b]thiophene, dithienothiophene, dihydrothieno [3,4-b]-1,4-dioxin, isobenzothiophene, dibenzothiophene, benzothiadiazothiophene, or combinations of these groups. The heteroaryl groups may also be substituted by alkyl, alkoxy, thioalkyl, fluorine, fluoroalkyl or further aryl or heteroaryl groups.

The (non-aromatic) alicyclic and heterocyclic groups encompass both saturated rings, i.e. those containing exclusively single bonds, and also partially unsaturated rings, i.e. those which may also contain multiple bonds. Heterocyclic rings contain one or more heteroatoms, preferably selected from Si, O, N, S and Se.

The (non-aromatic) alicyclic and heterocyclic groups can be monocyclic, i.e. contain only one ring, such as, for example, cyclohexane, or polycyclic, i.e. contain a plurality of rings, such as, for example, decahydronaphthalene or bicyclooctane. Particular preference is given to saturated groups. Preference is furthermore given to mono-, bi- or tricyclic groups having 3 to 25 C atoms, which optionally contain fused rings and are optionally substituted. Preference is furthermore given to 5-, 6-, 7- or 8-membered carbocyclic groups, in which, in addition, one or more C atoms may be replaced by Si and/or one or more CH groups may be replaced by N and/or one or more non-adjacent CH₂ groups may be replaced by -O- and/or -S-.

Preferred alicyclic and heterocyclic groups are, for example, 5-membered groups, such as cyclopentane, tetrahydrofuran, tetrahydrothiofuran, pyrrolidine, 6-membered groups, such as cyclohexane, silinane, cyclohexene, tetrahydropyran, tetrahydrothiopyran, 1,3-dioxane, 1,3-dithiane, piperidine, 7-membered groups, such as cycloheptane, and fused groups, such as tetrahydronaphthalene, decahydronaphthalene, indane, bicyclo[1.1.1]pentane-1,3-diyl, bicyclo[2.2.2]octane-1,4-diyl, spiro[3.3]heptane-2,6-diyl, octahydro-4,7-methanoindane-2,5-diyl.

The aryl, heteroaryl, carbon and hydrocarbon radicals optionally have one or more substituents, which are preferably selected from the group comprising silyl, sulfo, sulfonyl, formyl, amine, imine, nitrile, mercapto, nitro, halogen, C₁₋₁₂ alkyl, C₆₋₁₂ aryl, C₁₋₁₂ alkoxy, hydroxyl, or combinations of these groups.

Preferred substituents are, for example, solubility-promoting groups, such as alkyl or alkoxy, electron-withdrawing groups, such as fluorine, nitro or nitrile, or substituents for increasing the glass transition temperature (T_{g}) in the polymer, in particular bulky groups, such as, for example, t-butyl or optionally substituted aryl groups.

Preferred substituents are F, C!, Br, I, -CN, -NO₂, -NCO, -NCS, -OCN, -SCN, -C(=O)N(R^{z})₂, -C(=O)Y¹, -C(=O)R^{z}, -N(R^{z})₂, in which R^{z} has the meaning indicated above, and Y' denotes halogen, optionally substituted silyl or aryl having 6 to 40, preferably 6 to 20, C atoms, and straight-chain or branched alkyl, alkoxy, alkylcarbonyl, alkoxycarbonyl, alkylcarbonyloxy or alkoxycarbonyloxy having 1 to 25 C atoms, in which one or more H atoms may optionally be replaced by F or CI.

More preferred substituents, for example, F, Cl, CN, NO₂, CH₃, C₂H₅, OCH₃, OC₂H₅, COCH₃, COC₂H₅, COOCH₃, COOC₂H₅, CF₃, OCF₃, OCHF₂, OC₂F₅, furthermore phenyl.

Herein, the substituent denoted L on each occurrence, identically or differently, preferably is F, CI, CN, SCN, SF₅ or straight-chain or branched, in each case optionally fluorinated, alkyl, alkoxy, alkylcarbonyl, alkoxycarbonyl, alkylcarbonyloxy or alkoxycarbonyloxy having 1 to 12 C atoms.

It is preferred that L on each occurrence, identically or differently, denotes F or straight-chain or branched, in each case optionally fluorinated, alkyl or alkoxy having 1 to 7 C atoms,

"Substituted silyl or aryl" preferably means substituted by halogen, -CN, R^{y1}, -OR^{y1}, -CO-R^{y1}, -CO-O-R^{y1}, -O-CO-R^{y1} or-O-CO-O-R^{y1}, in which R^{y1} has the meaning indicated above.

Herein, 1,4-cyclohexylene rings and 1,4-phenylene rings are depicted as follows:

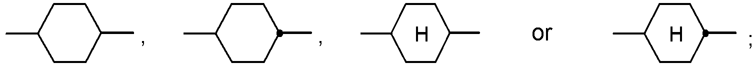

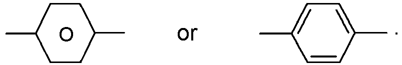

The cyclohexylene rings are trans-1,4-cyclohexylene rings.

Herein, unless explicitly stated otherwise, all concentrations are given in weight percent and relate to the respective complete mixture.

All temperatures are given in degrees centigrade (Celsius, °C) and all differences of temperatures in degrees centigrade. All physical properties and physicochemical or electro-optical parameters are determined and given for a temperature of 20 °C, unless explicitly stated otherwise.

The liquid-crystalline medium according to the invention comprises one or more compounds of the formula I as set forth above and below.

In formula I the group R¹ preferably denotes a straight-chain alkyl having 8 to 12 C atoms, more preferably a straight-chain alkyl having 8 to 10 C atoms.

In formula I the group L¹ preferably is H or CH₃, more preferably H.

In an embodiment the one or more compounds of formula I as used according to the invention are selected from the group of compounds of formulae I-i, I-ii and I-iii 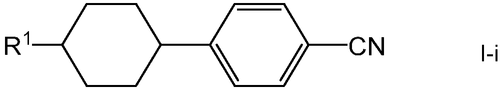 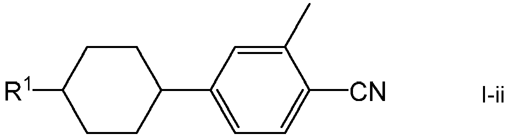 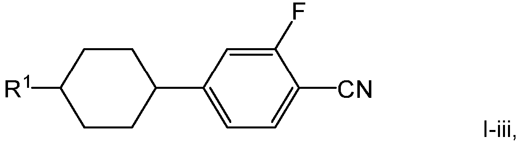 wherein R¹ has the meaning as set forth for formula I above and preferably denotes straight-chain alkyl having 8 to 16 C atoms, more preferably straight-chain alkyl having 8 to 12 C atoms.

It is particularly preferred that R¹ denotes n-octyl, n-nonyl or n-decyl, more preferably n-octyl or n-nonyl.

In a preferred embodiment the liquid-crystalline medium comprises one or more compounds of formula I-i, preferably two or more compounds of formula I-i, and more preferably at least three compounds of formula I-i.

In a preferred embodiment the one or more compounds of formula I as used according to the invention are selected from the compounds of formulae I-1 to I-12

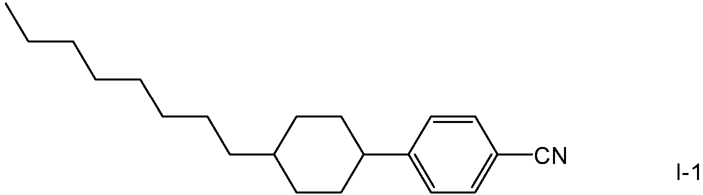

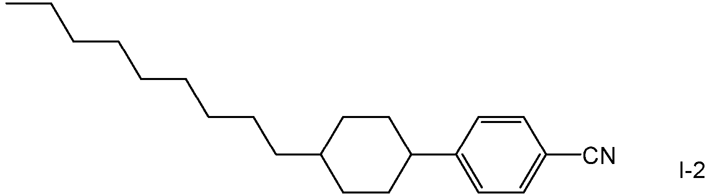

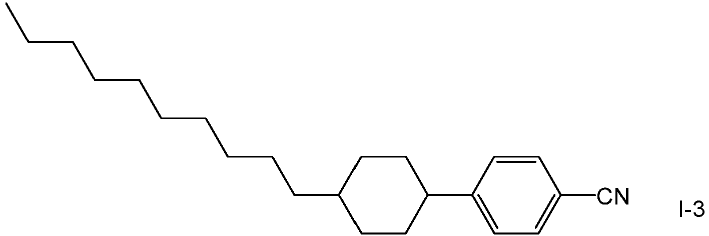

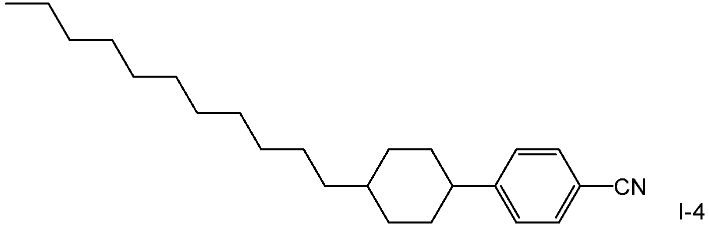

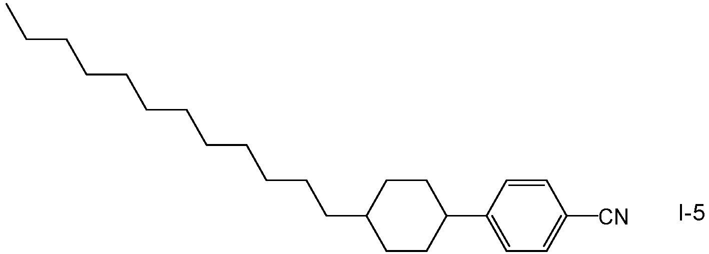

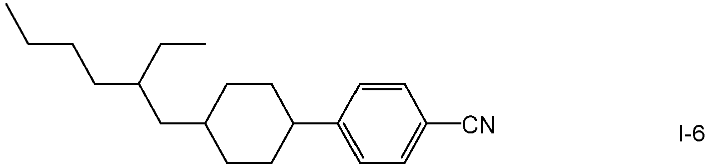

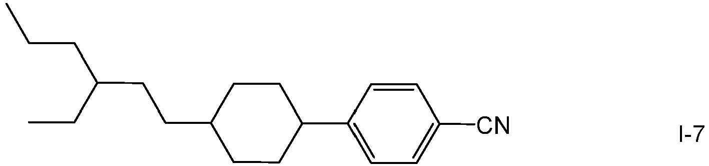

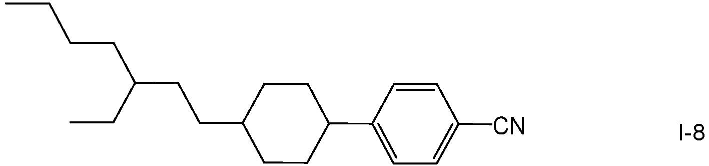

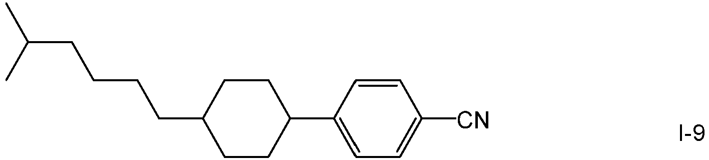

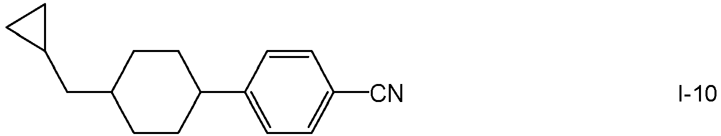

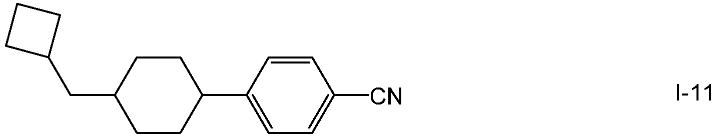

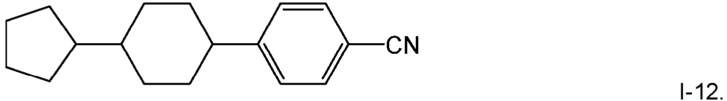

It is preferred that the liquid-crystalline medium comprises one or more compounds of formulae I-1, I-2, I-3, I-4 and I-5.

It is particularly preferred that the liquid-crystalline medium comprises one or more compounds of formulae I-1, I-2 and I-3, more preferably two or more compounds of formulae I-1, I-2 and I-3, and in particular all three compounds of formulae I-1, I-2 and I-3.

In a preferred embodiment the liquid-crystalline medium comprises the compound of formula I-1 and/or the compound of formula I-2.

Preferably the liquid-crystalline medium comprises the compounds of formulae I-1 and I-2.

In another embodiment the liquid-crystalline medium comprises the compound of formula I-2 and/or the compound of formula I-3.

The liquid-crystalline medium according to the invention preferably contains the one or more compounds of formula I, in particular of formulae I-i, I-ii and I-iii as well as I-1 to I-12, in a total amount of 1% by weight or more, more preferably 3% by weight or more, even more preferably 5% by weight or more, still more preferably 10% by weight or more, and in particular 15% by weight or more. In an embodiment the liquid-crystalline medium according to the invention contains the one or more compounds of formula I, in particular of formulae I-i, I-ii and I-iii as well as I-1 to I-12, in a total concentration in the range from 3% by weight to 35% by weight, preferably from 5% by weight to 30% by weight, and more preferably from 10% by weight to 25% by weight.

In embodiments where two or more compounds of formula I, in particular of formulae I-i, I-ii and I-iii as well as I-1 to I-12, are contained in the liquid-crystalline medium, it is preferred that an individual compound of formula I is present in the medium in a concentration of at least 0.5% by weight, preferably at least 2.5% by weight, more preferably at least 5% by weight, even more preferably in the range from 1% by weight to 15% by weight, and particular in the range from 4% by weight to 12% by weight.

A further aspect of the invention provides one or more compounds of the formula I, and in particular of the formula I-i, wherein R¹ is selected from n-decyl, n-undecyl, n-dodecyl, n-tridecyl, n-tetradecyl, n-pentadecyl, n-hexadecyl, n-heptadecyl and n-octadecyl, preferably from n-decyl, n-undecyl, n-dodecyl, n-tridecyl, n-tetradecyl, n-pentadecyl and n-hexadecyl, and in particular from n-decyl, n-undecyl and n-dodecyl. The one or more compounds may be favourably used in the media according to the invention.

In an embodiment the medium further comprises the compound of formula II

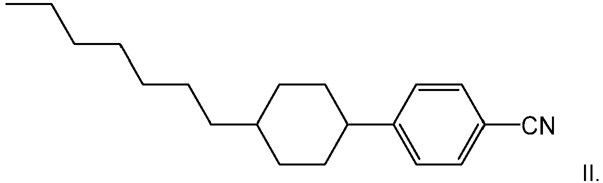

In an alternative embodiment the medium does not comprise the compound of formula II

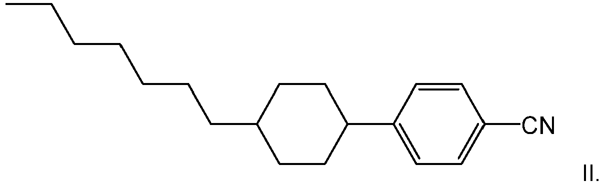

The liquid-crystalline medium according to the invention may suitably be provided as a dielectrically positive medium or as a dielectrically negative medium.

Above and below, Δε denotes the dielectric anisotropy, wherein Δε = ε_{∥} - ε_{⊥}. The dielectric anisotropy Δε is preferably determined at 20°C and 1 kHz.

In a preferred embodiment the liquid-crystalline medium has a positive dielectric anisotropy Δε, in particular a dielectric anisotropy of +0.5 or more.

The liquid-crystalline medium preferably has a dielectric anisotropy Δε of +0.5 or more, more preferably of +1.5 or more, and even more preferably of +2.5 or more. It is particularly preferred that the liquid-crystalline medium exhibits a dielectric anisotropy Δε in the range of from +1.5 to +20, more preferably from +3.0 to +12, even more preferably from +4.0 to +8.0 and in particular from +4.5 to +6.0.

In a preferred embodiment the liquid-crystalline medium further comprises one or more compounds of formula III 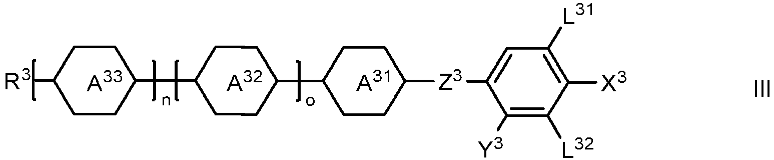 in which
- R³: denotes a straight-chain alkyl or alkoxy radical that is unsubstituted or halogenated and has 1 to 15 C atoms or a branched alkyl or alkoxy radical that is unsubstituted or halogenated and has 3 to 15 C atoms, where one or more CH₂ groups in these radicals may each be replaced, independently of one another, by 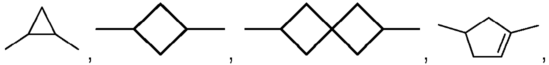 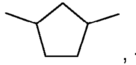 -C≡C-, -CF₂O-, -CH=CH-, -O-, -CO-O- or -O-CO- in such a way that O atoms are not linked directly to one another, 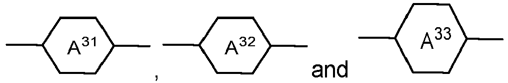 independently of one another, denote 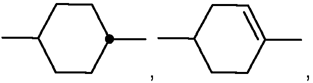 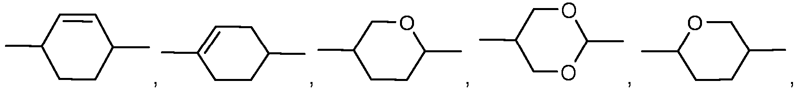 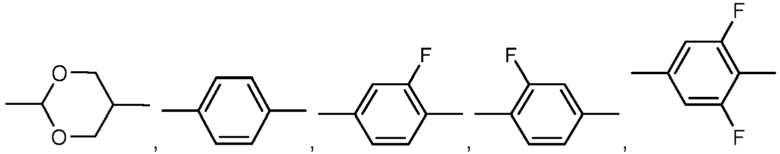
- or: 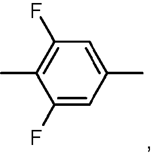
- L³¹ and L³²: independently of each other, denote H or F,
- Y³: denotes H or CH₃, preferably H,
- X³: denotes halogen, halogenated alkyl or halogenated alkoxy with 1 to 3 C atoms or halogenated alkenyl or halogenated alkenyloxy with 2 or 3 C atoms,
- Z³: denotes -CH₂CH₂-, -CF₂CF₂-, -COO-, *trans-* -CH=CH-, *trans*-CF=CF-, -CH₂O- or a single bond, preferably a single bond, and
- n and o: are, independently of each other, 0 or 1.

The medium preferably comprises the one or more compounds of formula III in a total amount of 5% by weight or more, more preferably 10% by weight or more, even more preferably 20% by weight or more, still more preferably 30% by weight or more, and in particular 40% by weight or more.

The compounds of formula III are preferably selected from the group of compounds of formulae III-i to III-v 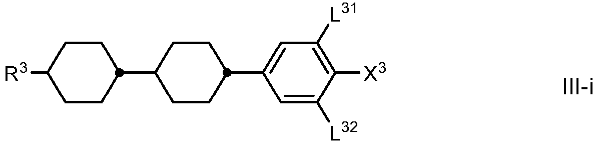 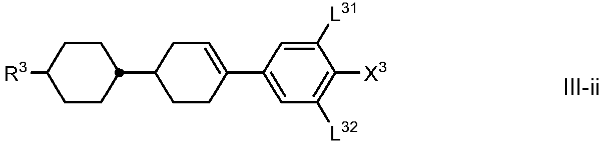 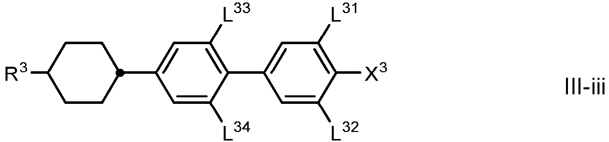 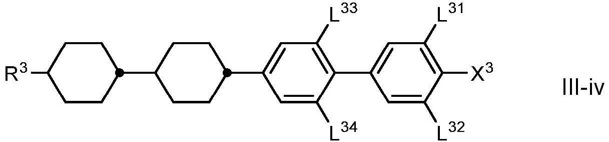 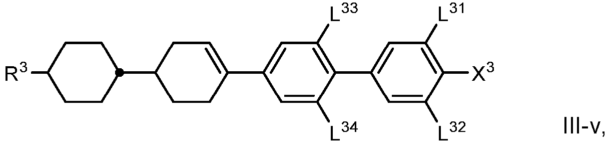 in which the groups R³, L³¹, L³² and X³ have the respective meanings given for formula III, and L³³ and L³⁴, independently of one another, denote H or F.

In an embodiment the liquid-crystalline medium comprises one or more compounds of formula III-iv, wherein preferably L³¹, L³² and L³³ denote F, L³⁴ preferably is H and X³ preferably is F, preferably in a total amount of at least 2% by weight, more preferably at least 4% by weight and in particular at least 6% by weight.

In a preferred embodiment the one or more compounds of formula III are selected from one or more compounds of formula III-a 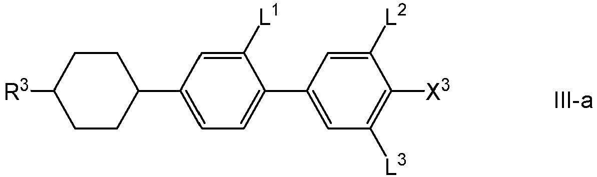 wherein L¹, L² and L³ denote, independently of one another, H or F, and R³ and X³ have the meanings as set forth for formula III.

In a particularly preferred embodiment the liquid-crystalline medium comprises one or more compounds selected from the group of compounds of formulae III-a-1 and III-a-2 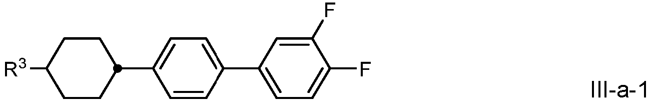 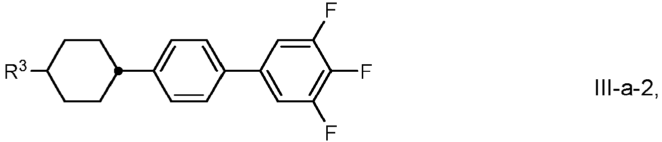 in which the group R³ has the meaning given for formula III.

The medium preferably comprises the one or more compounds of formula III-a, and in particular of formulae III-a-1 and III-a-2, in a total amount of 5% by weight or more, more preferably 10% by weight or more, even more preferably 15% by weight or more, still more preferably 20% by weight or more, and in particular 30% by weight or more.

In a preferred embodiment the liquid-crystalline medium further comprises one or more compounds of formula IV 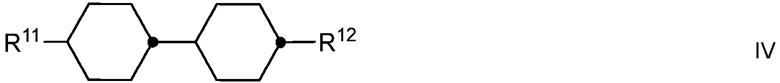 in which
- R¹¹: denotes a straight-chain alkyl radical having 1 to 12 C atoms or a branched or cyclic alkyl radical having 3 to 12 C atoms, or a straight-chain alkenyl radical having 2 to 12 C atoms or a branched alkenyl radical having 3 to 12 C atoms or a cyclic alkenyl radical having 5 to 12 C atoms, wherein one or more H atoms are optionally replaced by fluorine, preferably a straight-chain alkyl radical having 1 to 8 C atoms,
and
- R¹²: denotes a straight-chain alkyl or alkoxy radical having 1 to 12 C atoms or a branched or cyclic alkyl or alkoxy radical having 3 to 12 C atoms, or a straight-chain alkenyl radical having 2 to 12 C atoms or a branched alkenyl radical having 3 to 12 C atoms or a cyclic alkenyl radical having 5 to 12 C atoms, wherein one or more H atoms are optionally replaced by fluorine, preferably a straight-chain alkoxy having 1 to 8 C atoms.

The medium preferably comprises the one or more compounds of formula IV in a total amount of 2% by weight or more, more preferably 4% by weight or more, even more preferably 6% by weight or more, still more preferably 8% by weight or more, and in particular 10% by weight or more.

The compounds of formula IV are preferably selected from the group of compounds of formulae IV-1 to IV-4, more preferably from compounds of formula IV-2, 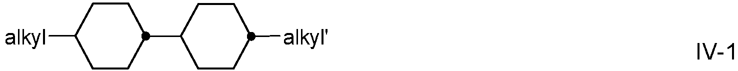 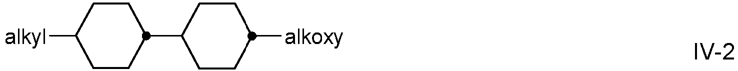 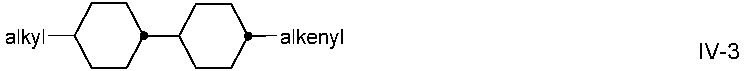 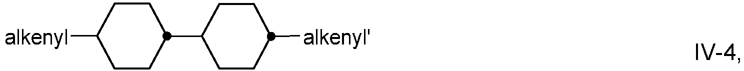 in which
- alkyl and alkyl',: independently of one another, denote alkyl having 1 to 7 C atoms, preferably having 2 to 5 C atoms,
- alkoxy: denotes alkoxy having 1 to 5 C atoms, preferably having 2 to 4 C atoms,
- alkenyl: denotes an alkenyl radical having 2 to 5 C atoms, preferably having 2 to 4 C atoms, particularly preferably 2 C atoms, and
- alkenyl': denotes an alkenyl radical having 2 to 5 C atoms, preferably having 2 to 4 C atoms, particularly preferably having 2 to 3 C atoms.

In a particularly preferred embodiment the medium comprises one or more compounds of formula IV-2 in a total amount of 2% by weight or more, more preferably 6% by weight or more, even more preferably 10% by weight or more, and in particular 12% by weight or more.

In another preferred embodiment the medium comprises one or more compounds of formula IV-3, more preferably the compound designated as CC-3-V, in a total amount of 2% by weight or more, more preferably 5% by weight or more, even more preferably 10% by weight or more, and in particular 15% by weight or more.

In a preferred embodiment the liquid-crystalline medium further comprises one or more compounds of formula V 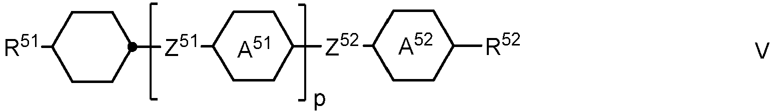 in which
- R⁵¹ and R⁵²: independently of one another, denote alkyl having 1 to 7 C atoms, alkoxy having 1 to 7 C atoms, or alkoxyalkyl, alkenyl or alkenyloxy having 2 to 7 C atoms, identically or differently, denote 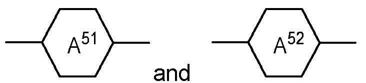 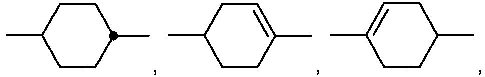 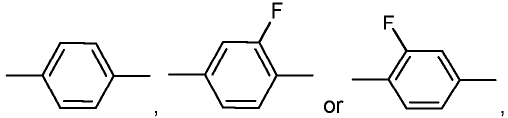
- Z⁵¹ and Z⁵²: independently of one another, denote -CH₂-CH₂-, -CH₂-O-, -CH=CH-, -C=C-, -COO- or a single bond, preferably -COO- or a single bond, and
- p: is 1 or 2.

The compounds of formula V are preferably selected from the group of compounds of formulae V-1 to V-7, preferably of formulae V-1 and V-2, 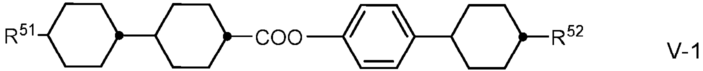 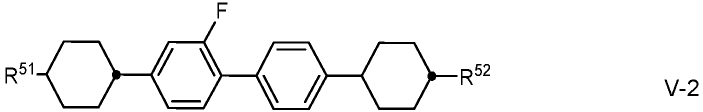 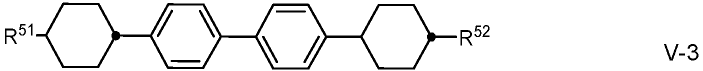 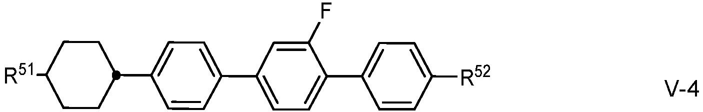 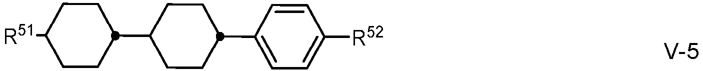 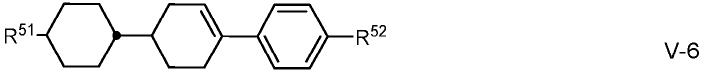 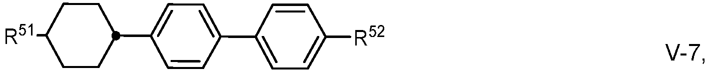 in which the groups R⁵¹ and R⁵² have the meanings as given for formula V, and preferably each, independently of one another, denote straight-chain alkyl having 1 to 7 C atoms or alkenyl having 2 to 7 C atoms.

The medium preferably comprises the one or more compounds of formula V, and in particular of formulae V-1 and V-2, in a total amount of 2% by weight or more, more preferably 5% by weight or more, even more preferably 10% by weight or more, still more preferably 15% by weight or more and in particular 20% by weight or more.

In a particular embodiment the medium comprises one or more compounds of formula V-5, wherein preferably R⁵¹ is alkenyl having 2 to 7 C atoms and R⁵² is alkyl having 1 to 7 C atoms, more preferably methyl, preferably in a total amount of 5% by weight or more, more preferably 10% by weight or more, even more preferably 15% by weight or more, still more preferably 20% by weight or more and in particular 25% by weight or more.

In a particular embodiment the medium comprises the compound designated as CCG-V-F, preferably in an amount of 5% by weight or more, more preferably 10% by weight or more, and in particular 15% by weight or more.

The liquid-crystalline medium preferably has an optical anisotropy Δn, in particular measured at a wavelength of 589 nm, of 0.04 or more, more preferably 0.06 or more, still more preferably 0.08 or more and even more preferably 0.10 or more.

Above and below, Δn denotes the optical anisotropy, wherein Δn = nₑ - nₒ, and wherein preferably the optical anisotropy Δn is determined at 20°C and at a wavelength of 589 nm.

The liquid-crystalline medium preferably has an optical anisotropy in the range of from 0.04 to 0.20, more preferably from 0.06 to 0.15 and in particular from 0.08 to 0.12.

The medium according to the invention is particularly useful for guest-host type applications, such as in dimmable smart windows, wherein the dye-doped liquid-crystalline media can exhibit suitably broad and stable LC phase ranges and in particular favourable low-temperature stability.

The liquid-crystalline media in accordance with the present invention preferably have a clearing point of 70°C or more, more preferably 80°C or more, even more preferably 90°C or more, still more preferably 105°C or more, and particularly preferably 110°C or more. In an embodiment the liquid-crystalline medium according to the invention has a clearing point in the range from 70°C to 170°C, preferably from 80°C to 150°C.

The high clearing point as defined can be beneficial in terms of the performance and the reliability of the devices which use the liquid-crystalline medium. In particular, the medium can maintain its functional properties over a suitably broad temperature range and also at elevated temperatures. This can be particularly advantageous for the use in window elements for regulating the passage of sunlight, especially when the window elements are exposed to direct or prolonged irradiation by sunlight. The high clearing point can also contribute to a favourably high degree of order of the liquid-crystalline host molecules, and hence the dichroic dye guest molecules at typical working temperatures, which can increase the obtainable contrast between the switching states.

The clearing point, in particular the phase transition temperature between the nematic phase and the isotropic phase, can be measured and determined by commonly known methods, e.g. using a Mettler oven, a hot-stage under a polarizing microscope, or differential scanning calorimetry (DSC) analysis. According to the invention the clearing point is preferably determined using a Mettler oven.

The nematic phase of the media according to the invention preferably extends at least from -10°C or less to 70°C or more. An even broader nematic phase range is more preferred, in particular extending up to 85°C or more, more preferably extending at least from -20°C or less to 100°C or more and particularly preferably extending from -30°C or less to 110°C or more.

The LC medium according to the invention preferably is a nematic liquid crystal.

The media according to the invention are prepared in a manner conventional per se. In general, the components are dissolved in one another, preferably at elevated temperature. The mixing is preferably carried out under inert gas, for example under nitrogen or argon. The one or more dyes preferably are subsequently added, preferably at elevated temperature, more preferably at above 40°C and particularly preferably at above 50°C. In general, the desired amount of the components used in smaller amount is dissolved in the components making up the principal constituent. It is also possible to mix solutions of the components in an organic solvent, for example in acetone, toluene, chloroform or methanol, and to remove the solvent again, for example by distillation, after mixing.

The invention furthermore relates to a process for the preparation of the mesogenic media according to the invention.

The invention furthermore relates to the use of an LC medium comprising the at least one dichroic dye in a liquid-crystal device of the guest-host type, wherein the device in particular is a window component or a display. In the device the medium according to the invention are preferably provided in one or more switching layers.

In a preferred embodiment the device, in particular the window element, contains only a single switching layer.

In another embodiment the device, in particular the window element, contains two switching layer, preferably arranged in a so-called double cell.

The invention furthermore relates to the use of a mixture comprising a liquid-crystalline medium and the one or more dichroic dyes as specified in a device for regulating the passage of energy from an outside space into an inside space.

The medium according to the invention comprises one or more dichroic dyes, in particular in a minimum amount as specified.

In this respect, the one or more dichroic dyes are favourably provided in amounts that are useful and effective to give the desired contrast between the switching states in the optical and electro-optical devices, in particular suitable transmission differences between the bright state and the dark state and preferably also an effective dark state with minimal transmission when desired.

It has surprisingly been found that the medium according to the invention is particularly suitable to contain and provide comparatively high concentrations of dichroic dye(s). In a preferred embodiment the one or more dichroic dyes are contained in the medium in an amount of at least 4% by weight, preferably at least 5% by weight, more preferably at least 6% by weight, even more preferably at least 7.5% by weight, and in particular at least 10% by weight. In a particularly preferred embodiment the one or more dichroic dyes are contained in the medium in an amount of 5% by weight or more.

By providing the liquid-crystalline medium according to the invention a modulation medium can thus be obtained which can give a beneficial performance in optical and electro-optical applications and in particular in the use of guest-host applications such as in dimmable smart windows. In this respect, facilitating the provision of the dichroic dye(s) in higher concentrations can be especially beneficial in that an improved high contrast between the bright state and the dark state and a very effective dark state with minimum transmission may be obtained. This means that in some applications a single switching layer may be sufficient to achieve the desired device characteristics and/or that a smaller switching layer thickness or respectively cell gap may be sufficient to obtain the desired contrast and an effective dark state.

It was presently surprisingly found that the medium according to the invention can provide benefits in terms of the solubility as well as the effects associated with e.g. the viscosity, the elastic constants and the phase behaviour and phase stability, especially with respect to also possible higher concentrations of the dichroic dyes in the medium. In this respect, favourable phase behaviour and phase stability can be achieved both with regard to changes in the dye concentrations and changes in temperature.

In particular it was surprisingly found that providing the one or more compounds of formula I as specified, in particular including as group R¹ longer alkyl chains such as straight-chain alkyl groups having 8 to 12 C atoms or more and especially groups such as n-octyl and n-nonyl, can favourably contribute to obtaining modulation media having switching states with uniform appearance and favourable aesthetic impression and to an effective and efficient device performance e.g. in terms of fast and uniform switching. Such uniformity can advantageously also be achieved at low temperatures and at high temperatures and for comparatively high dye concentrations.

In an embodiment the medium does not comprise any compounds of formula I-A 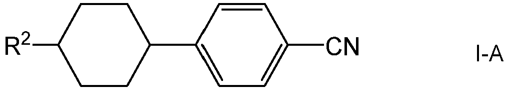 or it contains the compounds of formula I-A in a total amount of 2% by weight or less, preferably 1% by weight or less, more preferably 0.1% by weight or less, wherein R² denotes a straight-chain alkyl having 1 to 6 C atoms, in particular a straight-chain alkyl having 1 to 5 C atoms.

In comparison to the compounds of present formula I, it was surprisingly found that the compounds of formula I-A which have comparatively shorter straight-chain alkyl groups such as propyl or pentyl, may under certain conditions or circumstances provide less benefits in terms of the phase behaviour or stability. It is presently believed that these compounds of formula I-A may be less suitable to advantageously influence the phase behaviour and phase retention for example at low temperatures or for higher dye concentrations by being less effective in suppressing unwanted phase transitions or phase inhomogeneities or unwanted textures such as fan-like, focal conic or pseudo focal conic textures or an inhomogeneous appearance. In particular, the switching between optical states may be slower and inhomogeneities such as grainy textures may occur.

The one or more dichroic dyes preferably have suitable solubility, stability and reliability in liquid-crystalline media. In addition, the dyes preferably exhibit a favourably large extinction coefficient, preferably within the visible light spectrum and/or within the NIR spectrum, in particular within the visible light spectrum.

The dyes preferably exhibit an absorption maximum at a wavelength in the visible or NIR spectrum, more preferably at a wavelength in the visible light spectrum.

The dichroic dyes can favourably be used as guest compounds in liquid-crystalline host mixtures. Therefore, in a preferred embodiment the dyes are dissolved in the LC medium.

In an embodiment the one or more dichroic dyes are positive dichroic dyes, i.e. dyes which have a positive degree of anisotropy R.

The degree of anisotropy R is determined for the LC mixture comprising the dye from the values of the extinction coefficients for parallel and perpendicular alignment of the molecules relative to the direction of the polarisation of the light.

According to the invention the degree of anisotropy R preferably is greater than 0.5, more preferably greater than 0.6, even more preferably greater than 0.7, and in particular greater than 0.8.

The absorption preferably reaches a maximum when the polarisation direction of the light is parallel to the direction of the longest molecular elongation of the dichroic dye compounds, and it preferably reaches a minimum when the polarisation direction of the light is perpendicular to the direction of the longest molecular elongation of the dichroic dye compounds.

According to the invention the liquid-crystalline medium comprises at least one dichroic dye. The liquid-crystalline medium preferably comprises one, two, three, four, five, six, seven or eight dichroic dyes, more preferably at least three dichroic dyes.

The absorption spectra of the dichroic dyes preferably complement one another in such a way that the impression of a black colour, or respectively grey colour or colour-neutral appearance, arises for the eye. The preferably two or more, more preferably three or more dichroic dyes of the liquid-crystalline medium according to the invention preferably cover a large part of the visible spectrum, more preferably cover the whole visible spectrum. The precise way in which a mixture of dyes which appears black or grey to the eye can be prepared is known in the art and is described, for example, in M. Richter, Einführung in die Farbmetrik [Introduction to Colorimetry], 2nd Edition, 1981, ISBN 3-11-008209-8, Walter de Gruyter & Co.

The setting of the colour location of a mixture of dyes is described in the area of colorimetry. To this end, the spectra of the individual dyes are calculated taking into account the Lambert-Beer law to give an overall spectrum and converted into the corresponding colour locations and luminance values under the associated illumination, for example illuminant D65 for daylight, in accordance with the rules of colorimetry. The position of the white point is fixed by the respective illuminant, for example D65, and is quoted in tables, for example in the reference above. Different colour locations can be set by changing the proportions of the various dyes.

According to a preferred embodiment, the medium comprises one or more dichroic dyes which absorb light in the red and NIR region, i.e. at a wavelength of 600 nm to 2000 nm, preferably in the range from 600 nm to 1800 nm, particularly preferably in the range from 650 nm to 1300 nm.

Preferably the one or more dichroic dyes are selected from azo dyes, anthraquinones, methine compounds, azomethine compounds, merocyanine compounds, naphthoquinones, tetrazines, perylenes, terrylenes, quaterrylenes, higher rylenes, pyrromethenes, thiadiazoles, benzothiadiazoles, nickel dithiolenes, (metal) phthalocyanines, (metal) naphthalocyanines and (metal) porphyrins. Of these, particular preference is given to azo dyes, thiadiazoles and benzothiadiazoles.

In an embodiment the dichroic dyes are preferably selected from the dye classes indicated in B. Bahadur, Liquid Crystals - Applications and Uses, Vol. 3, 1992, World Scientific Publishing, Section 11.2.1, and particularly preferably from the explicit compounds given in the table present therein.

Said dyes belong to the classes of dichroic dyes which are known in the art and have been described in the literature. Thus, for example, anthraquinone dyes are described in EP 34832, EP 44893, EP 48583, EP 54217, EP 56492, EP 59036, GB 2065158, GB 2065695, GB 2081736, GB 2082196, GB 2094822, GB 2094825, JP-A 55-123673, DE 3017877, DE 3040102, DE 3115147, DE 3115762, DE 3150803 and DE 3201120, naphthoquinone dyes are described in DE 3126108 and DE 3202761, azo dyes in EP 43904, DE 3123519, WO 82/2054, GB 2079770, JP-A 56-57850, JP-A 56-104984, US 4308161, US 4308162, US 4340973, T. Uchida, C. Shishido, H. Seki and M. Wada: Mol. Cryst. Lig. Cryst. 39, 39-52 (1977), and H. Seki, C. Shishido, S. Yasui and T. Uchida: Jpn. J. Appl. Phys. 21, 191-192 (1982), and perylenes are described in EP 60895, EP 68427 and WO 82/1191. Rylene dyes as described, for example, in EP 2166040, US 2011/0042651, EP 68427, EP 47027, EP 60895, DE 3110960 and EP 698649.

In a preferred embodiment benzothiadiazoles, in particular as described in WO 2014/187529 and in WO 2020/104563, and/or thiadiazoloquinoxalines, in particular as described in WO 2016/177449 and in WO 2020/104563, are used as the dichroic dyes.

Preferably the medium comprises one or more benzothiadiazole derivatives in combination with one or more thiadiazoloquinoxaline derivatives. Even more preferably the medium comprises two or more benzothiadiazole derivatives in combination with two or more thiadiazoloquinoxaline derivatives.

In a particularly preferred embodiment the liquid-crystalline medium comprises at least one compound selected from the group of compounds of the following formulae D-1 to D-10

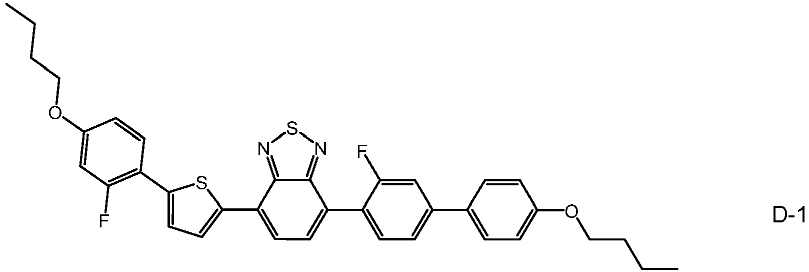

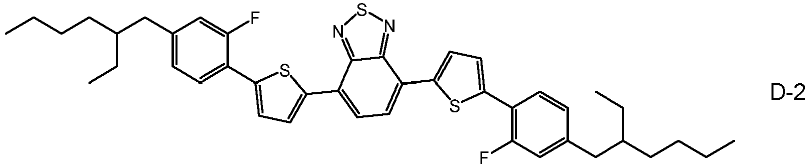

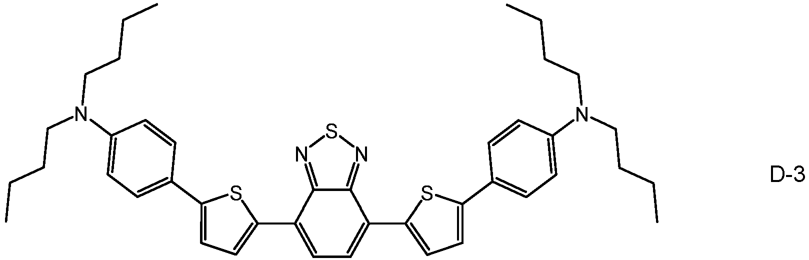

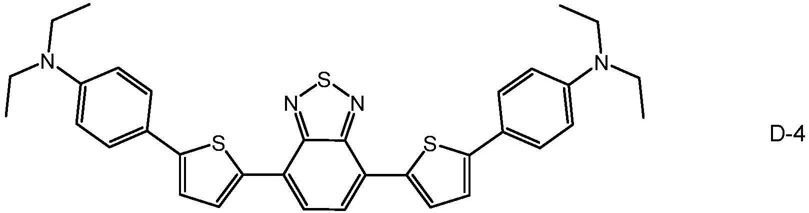

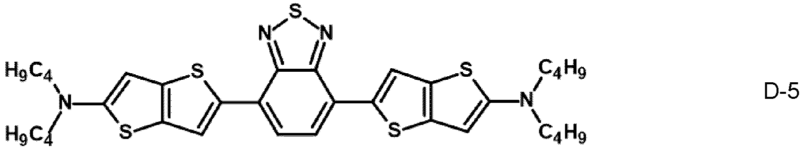

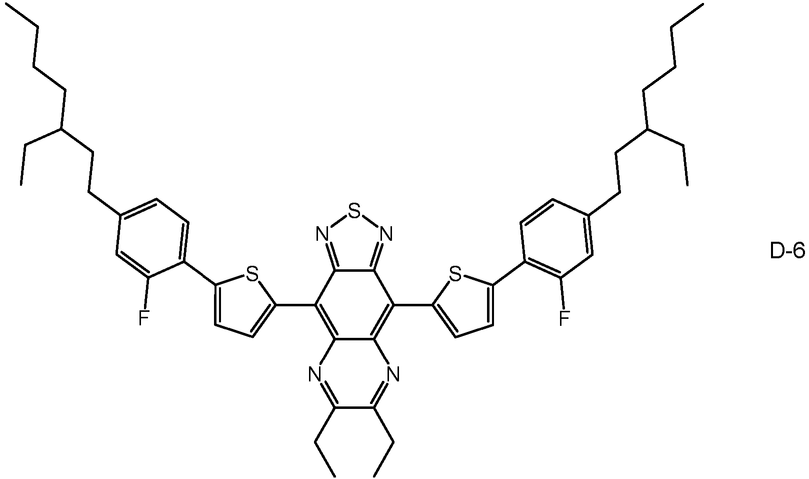

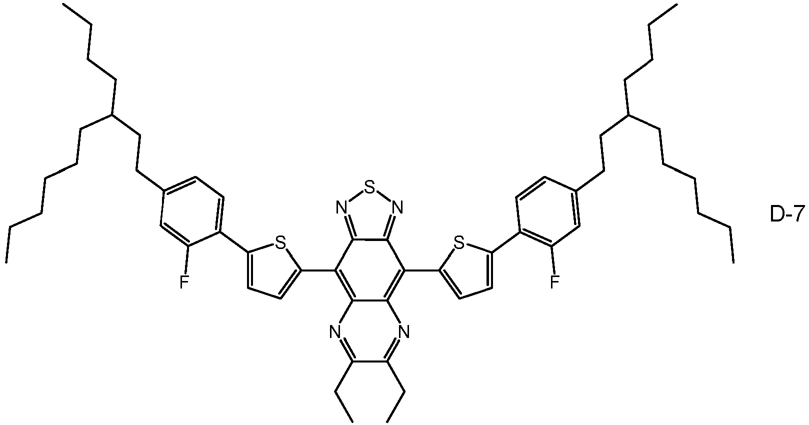

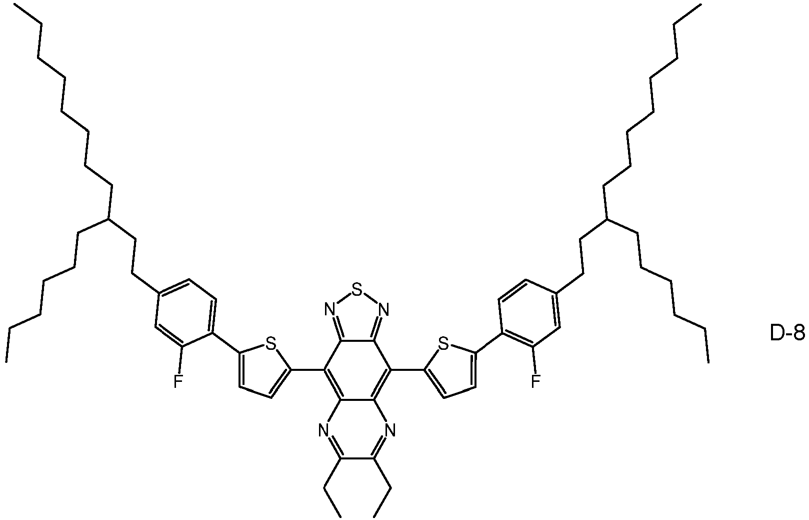

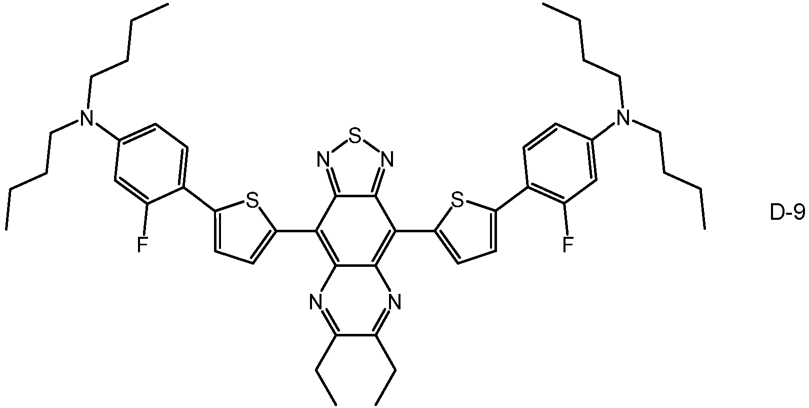

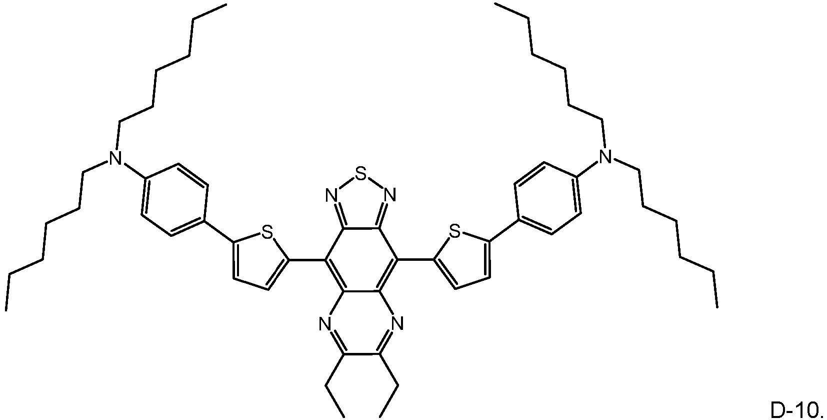

It is preferred that the medium comprises one or more compounds selected from the group of compounds of formulae D-1, D-2, D-3, D4 and D-5, more preferably two or more compounds selected from the group of compounds of formulae D-1, D-2, D-3, D4 and D-5.

In an embodiment it is preferred that the medium comprises one or more compounds selected from the group of compounds of formulae D-6, D-7, D-8, D9 and D-10, more preferably two or more compounds selected from the group of compounds of formulae D-6, D-7, D-8, D9 and D-10.

It is particularly preferred that the medium comprises one or more compounds selected from the group of compounds of formulae D-1, D-2, D-3, D4 and D-5 together with one or more compounds selected from the group of compounds of formulae D-6, D-7, D-8, D-9 and D-10, more preferably two or more compounds selected from the group of compounds of formulae D-1, D-2, D-3, D4 and D-5 together with two or more compounds selected from the group of compounds of formulae D-6, D-7, D-8, D-9 and D-10

In an embodiment the one or more dichroic dyes have a chromophore group which comprises a substituted phenylene or at least two fused rings wherein at least one ring is an unsubstituted or substituted phenylene. Preferably the one or more dichroic dyes have a chromophore group which comprises at least two fused rings wherein one ring is phenylene.

In a particular embodiment, the medium according to the invention comprises one or more quencher compounds. This is preferred if the device according to the invention comprises one or more fluorescent dyes in the medium and in the switching layer.

Quencher compounds are compounds which quench fluorescence. The quencher compounds can take on the electronic excitation energy of adjacent molecules, such as, for example, fluorescent dyes, in the switching layer and undergo a transition into an electronically excited state in the process. The fluorescent dye to be quenched is thus converted into the electronic ground state and is thus prevented from emitting fluorescence or undergoing a subsequent reaction. The quencher compound itself returns to the ground state through radiation-free deactivation or by emission of light and is again available for further quenching.

The quencher compound may have various functions in the medium and the switching layer of the device according to the invention. Firstly, the quencher compound may contribute to extending the lifetime of a dye system by deactivation of electronic excitation energy. Secondly, the quencher compound can eliminate additional colour effects which may be aesthetically undesirable, for example coloured emission in the inside space emanating from the fluorescent dyes in the switching layer.

In order to achieve effective quenching, the quencher compound should be adapted to the respective dye system, in particular the dye absorbing at the longest wavelength in a dye combination. The way to do this is known in the art.

Preferred quencher compounds are described, for example, in Table 8.1 on page 279 in J. R. Lakowicz, Principles of Fluorescence Spectroscopy, 3rd Edition, 2010, ISBN 10: 0-387-31278-1, Springer Science+Business Media LLC. Further classes of compounds, e.g. so-called dark quenchers or black hole quenchers, are known in the art. Examples include azo dyes and aminoanthraquinones. The quencher compounds used in the switching layer of the device according to the invention may also be non-fluorescent dyes or dyes which only fluoresce in the NIR.

Preferably, any quencher compounds present are selected so that fluorescence in the visible part of the spectrum is suppressed.

The liquid-crystalline media may also comprise further additives known to the person skilled in the art and described in the literature, such as, for example, polymerisation initiators, inhibitors, surface-active substances, stabilizers, antioxidants, e.g. BHT, TEMPOL, microparticles, free-radical scavengers, nanoparticles, etc. Suitable stabilizers and dopants are mentioned below in Tables E and F.

In an embodiment the liquid-crystalline medium comprises additives or further compounds, in particular one or more stabilizers, preferably two or more stabilizers, and/or one or more polymerisable compounds, preferably one or more polmyerisable mesogenic compounds.

In a preferred embodiment the liquid-crystalline medium comprises one or more chiral compounds, preferably one or more chiral dopants.

Preferably the liquid-crystalline media contain the one or more chiral dopants in a concentration from 0.01 to 2% by weight, more preferably from 0.05 to 1% by weight, and even more preferably from 0.1 to 0.5% by weight. The chiral dopants are preferably selected from the group consisting of compounds from Table E below, more preferably from the group consisting of R- or S-811, R- or S-1011, R- or S-2011, R- or S-3011, R- or S-4011, and R- or S-5011.

It is particularly preferred that the medium comprises a chiral compound of the following formula 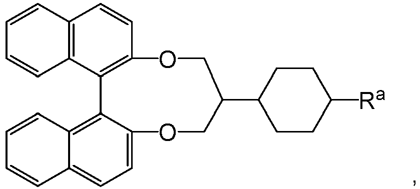 preferably the R-stereoisomer, wherein R^{a} denotes alkyl having 1 to 8 C atoms, preferably having 2 to 5 C atoms,
and in particular a chiral compound of the formula 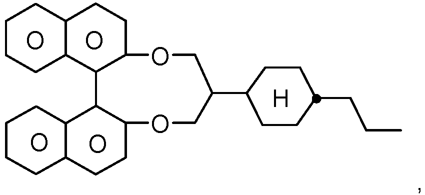 preferably the R-stereoisomer.

A chiral or cholesteric medium can be prepared, for example, by doping a nematic LC medium with a chiral dopant having a high twisting power. The pitch p of the induced cholesteric helix is then given by the concentration c and the helical twisting power HTP of the chiral dopant in accordance with equation (1): $p = {\left(HTP c\right)}^{- 1}$

The pitch herein means the pitch p of the cholesteric helix, wherein the pitch p is the distance for the orientational axis (director) of the chiral or cholesteric LC to undergo a 2π rotation.

It is also possible to use two or more dopants, for example in order to compensate for the temperature dependence of the HTP of the individual dopants and thus to achieve small temperature dependence of the helix pitch. For the total HTP (HTPₜₒₜₐₗ) then approximately equation (2) holds: ${HTP}_{total} = {\sum }_{i} {c}_{i} {HTP}_{i}$ wherein cᵢ is the concentration of each individual dopant and HTPᵢ is the helical twisting power of each individual dopant.

The liquid-crystalline media preferably contain one or more chiral compounds and in particular chiral dopants. The chiral dopants preferably have a high absolute value of the HTP and can generally be added in relatively low concentrations to mesogenic base mixtures, and also to the dye-doped mixtures, and have good solubility in the achiral component. If two or more chiral compounds are employed, they may have the same or opposite direction of rotation and the same or opposite temperature dependence of the twist.

Preferably, the one or more chiral compounds optionally contained in the liquid-crystalline media have an absolute value of the helical twisting power of 5 µm⁻¹ or more, more preferably of 10 µm⁻¹ or more and even more preferably of 15 µm⁻¹ or more, preferably in the commercial liquid-crystal mixture MLC-6828 from Merck KGaA. Particular preference is given to chiral compounds having an absolute value of the helical twisting power (HTP) of 20 µm⁻¹ or more, more preferably of 40 µm⁻¹ or more, even more preferably of 60 µm⁻¹ or more, and most preferably in the range of 80 µm⁻¹ or more to 260 µm⁻¹ or less, preferably in the commercial liquid-crystal mixture MLC-6828 from Merck KGaA.

The invention further relates to a switching element which comprises a switching layer which contains the liquid-crystalline medium. The switching layer can be arranged on a substrate or between two substrates, and preferably is arranged between two substrates. The switching layer contains an active material, i.e. a material which can reversibly undergo a change which influences the optical behaviour and in particular the transmission behaviour of light passing through the layer, and is operable in different optical states and in particular is electrically switchable. Preferably the substrates are provided with alignment layers or orientation layers which are in direct contact with the liquid-crystalline medium.

The medium and the switching element are favourably used in devices for regulating the passage of energy in the form of sunlight from the environment into an inside space. The passage of energy to be regulated here takes place from the environment, i.e. an outside space, into an inside space.

The inside space here can be any desired space that is substantially sealed off from the environment, for example a building, a vehicle or a container.

However, the device can also be employed for aesthetic room design, for example for light and colour effects. For example, door and wall elements containing the device according to the invention in grey or in colour can be switched to transparent.

Furthermore, the device may also comprise white or coloured flat backlighting which is modulated in brightness or yellow flat backlighting which is modulated in colour by means of a blue guest-host display. In case glass substrates are used in the device, one or both glass sides of the device according to the invention may be provided with roughened or structured glass for the coupling-out of light and/or for the generation of light effects.

The liquid-crystalline medium according to the invention therefore is preferably used in an architectural window or an automobile, for example a car sunroof. In particular, the switchable optical device can be comprised in a window of a building or a facade. The device according to the invention may also be applied to a commercial vehicle, a boat, a train or an airplane.

The medium and the switching element are preferably comprised in a window element. The window element preferably and suitably is used as a component of a window and together with for example further fittings and framing may be used to provide windows e.g. to openings in buildings or vehicles and as facades or in interior partitions.

In a further alternative use, the device is employed for regulating the incidence of light on the eyes, for example in protective goggles, visors or sunglasses, where the device keeps the incidence of light on the eyes low in one switching state and reduces the incidence of light to a lesser extent in another switching state.

The device according to the invention is preferably arranged in an opening in a relatively large two-dimensional structure, where the two-dimensional structure itself only allows slight passage of energy or none at all, and where the opening has relatively high energy transmissivity. The two-dimensional structure is preferably a wall or another boundary of an inside space to the outside. Furthermore, the two-dimensional structure preferably covers an area of at least equal size, particularly preferably an area at least twice as large as the opening in it in which the device according to the invention is disposed.

The device, in particular the window element, is preferably characterised in that it has an area of at least 0.05 m², preferably at least 0.1 m², particularly preferably at least 0.5 m² and very particularly preferably at least 1.0 m². For windows comprising the device, the device area preferably is in range from 0.1 m² to 10 m², more preferably from 0.5 m² to 5 m², and in particular from 1 m² to 3 m².

The device is preferably accommodated in an opening having relatively high energy transmissivity, as described above, in a building, a container, a vehicle or another substantially closed space. The device can generally be used for any desired inside spaces, particularly if they have only limited exchange of air with the environment and have light-transmitting boundary surfaces through which input of energy from the outside in the form of light energy can take place. The use of the device for inside spaces which are subjected to strong insulation through light-transmitting areas, for example through window areas, is particularly preferred.

The device according to the invention is switchable. Switching here is taken to mean a change in the passage of energy, in particular light, through the device. The device according to the invention is preferably electrically switchable, as described, for example, in WO 2009/141295 and in WO 2014/090373.

In the case where the device is electrically switchable, it preferably comprises two or more electrodes, which are preferably installed on both sides of the switching layer. The electrodes preferably consist of ITO or a thin, preferably transparent metal and/or metal-oxide layer, for example silver or FTO (fluorine-doped tin oxide) or an alternative material known in the art for this use. The electrodes are preferably provided with electrical connections. The voltage is preferably provided by a battery, a rechargeable battery or an external power supply, in particular an external power supply.

The switching operation in the case of electrical switching takes place by a (re)alignment of the molecules of the liquid-crystalline medium by the application of voltage.

In an embodiment, the device is converted from a state having high absorption, i.e. low light transmissivity, which is present without voltage, into a state having lower absorption, i.e. higher light transmissivity. The liquid-crystalline medium of the switching layer is preferably nematic in both states. The voltage-free state is preferably characterised in that the molecules of the liquid-crystalline medium, and thus the dichroic compound(s), are aligned parallel to the plane of the switching layer. This is preferably achieved by a correspondingly selected alignment layer. The state where voltage is applied is preferably characterised in that the molecules of the liquid-crystalline medium, and thus the dye molecules, are perpendicular to the plane of the switching layer.

In an alternative embodiment, the device is switchable from a state having low absorption, i.e. high light transmissivity, which is present without voltage, into a state having higher absorption, i.e. lower light transmissivity. The liquid-crystalline medium of the switching layer is preferably nematic in both states.

In a particular embodiment a switching element is provided which has a switching state wherein the switching layer has a non-twisted nematic configuration and wherein the liquid-crystalline medium in the switching layer has a positive dielectric anisotropy and a homogeneous alignment.

In an embodiment the switching element and the window element are configured to operate in the so-called electrically controlled birefringence mode.

In a further embodiment a switching element is provided which has at least one switching state wherein the switching layer has a twisted, supertwisted or highly twisted nematic configuration, preferably a highly twisted nematic configuration.

In this case the switching layer has a chiral or twisted configuration in one switching state, in particular in the presence or respectively in the absence of an electric field, where the twist angle or rotational angle of the cholesteric helix may be set as desired.

For example, in the twisted nematic (TN) configuration, the twist angle may typically be set at 90° or approximately 90°. Alternatively, the element can be arranged in the super-twisted nematic (STN) configuration, where the twist angle exceeds 90° and typically ranges from above 90° to 270°, e.g. setting a twist angle of 180° or approximately 180°. Furthermore, the twist of the cholesteric helix may be set having angles which exceed 270° and also go beyond 360° to obtain a highly twisted nematic (HTN) configuration.

The device according to the invention preferably has the following layer sequence, where further layers may additionally be present. The layers indicated below are preferably directly adjacent to one another in the device:
- substrate layer, preferably comprising glass or polymer
- electrically conductive transparent layer, preferably comprising ITO
- alignment layer
- switching layer comprising the liquid-crystalline medium
- alignment layer
- electrically conductive transparent layer, preferably comprising ITO
- substrate layer, preferably comprising glass or polymer.

In another embodiment the device contains two switching layers, which may be arranged in a so-called double cell. In this case two switchable optical cells are combined to form a multilayer arrangement of the window element. In this embodiment the switching element thus comprises two switching layers comprising the liquid-crystalline medium.

The alignment layers can be any desired layers known to the person skilled in the art for this purpose. Preference is given to polyimide layers, particularly preferably layers comprising rubbed polyimide. In an embodiment planar alignment is provided, where more preferably a slight pretilt angle may be set.

Furthermore, polymers obtained by an exposure process to polarised light can be used as alignment layer in order to achieve alignment of the compounds of the liquid-crystalline medium in accordance with an alignment axis, i.e. photoalignment.

The switching layer in the device according to the invention is preferably arranged between two substrate layers or enclosed thereby. The substrates are preferably optically transparent. The substrate layers can consist, for example, of glass or a polymer, preferably a light-transmitting polymer.

Suitable glass substrates include, for example, float glass, downdraw glass, chemically or heat-treated toughened glass, borosilicate glass and aluminosilicate glass.

Suitable polymer substrates include, for example, polyethylene terephthalate (PET), polyethylene naphthalate (PEN), polyvinylbutyral (PVB), polymethyl methacrylate (PMMA), polycarbonate (PC), polyimide (PI), cyclic olefin polymers (COP) and cellulose triacetate (TAC).

The two substrates are arranged as a cell wherein a gap is formed by the two substrates. The size of the gap, or respectively the thickness of the switching layer, is preferably from 1 µm to 100 µm, preferably from 2 µm to 50 µm and more preferably from 3 µm to 25 µm, and most preferably from 5 µm to 10 µm. The cell is usually sealed by means of glue lines located at or near the edges. In a preferred embodiment the cell gap is 25 µm or less, preferably 10 µm or less, and more preferably 6 µm or less.

The device, in particular the window element, is preferably characterised in that it does not comprise a polymer-based polariser, particularly preferably does not comprise a polariser in the solid material phase and very particularly preferably does not comprise a polariser at all.

However, in accordance with an alternative embodiment, the device may also comprise one or more polarisers. The polarisers in this case are preferably linear polarisers.

In a preferred embodiment, the window element is a constituent of a window, more preferably a window component comprising at least one glass surface, particularly preferably a component of an insulated glazing unit.

In the present invention and especially in the following examples, the structures of the mesogenic compounds are indicated by means of abbreviations, also called acronyms. In these acronyms, the chemical formulae are abbreviated as follows using Tables A to C below. All groups CₙH₂ₙ₊₁, CₘH₂ₘ₊₁ and CₗH₂ₗ₊₁ or CₙH₂ₙ₋₁, CₘH₂ₘ₋₁ and CₗH₂ₗ₋₁ denote straight-chain alkyl or alkenyl, preferably 1E-alkenyl, each having n, m and I C atoms respectively. Table A lists the codes used for the ring elements of the core structures of the compounds, while Table B shows the linking groups. Table C gives the meanings of the codes for the left-hand or right-hand end groups. The acronyms are composed of the codes for the ring elements with optional linking groups, followed by a first hyphen and the codes for the left-hand end group, and a second hyphen and the codes for the right-hand end group. Table D shows illustrative structures of compounds together with their respective abbreviations.

**Table A: Ring elements**

| | | | |
|---|---|---|---|
| **C** | 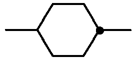 | **C(CN)** | 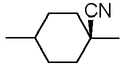 |
| **P** | 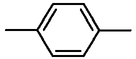 | **P(F,CN)** | 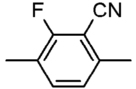 |
| **D** | 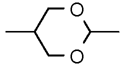 | **DI** | 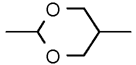 |
| **A** | 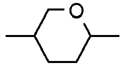 | **AI** | 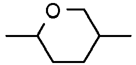 |
| **G** | 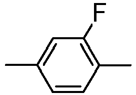 | **GI** | 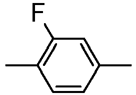 |
| **U** | 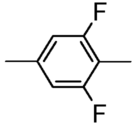 | **UI** | 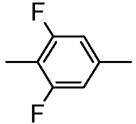 |
| **Y** | 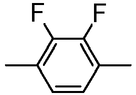 | | |
| **M** | 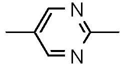 | **MI** | 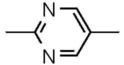 |
| **N** | 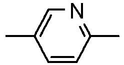 | **NI** | 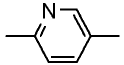 |
| **Np** | 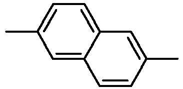 | **dH** | 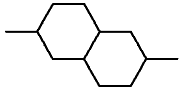 |
| **N3f** | 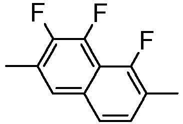 | **N3fl** | 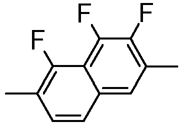 |
| **tH** | 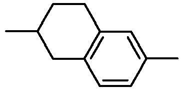 | **tHI** | 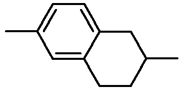 |
| **tH2f** | 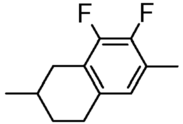 | **tH2fl** | 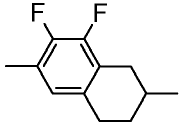 |
| **K** | 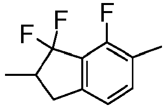 | **KI** | 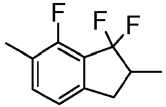 |
| **L** | 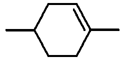 | **LI** | 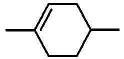 |
| **F** | 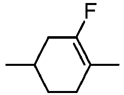 | **FI** | 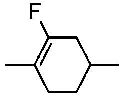 |
| **Nf** | 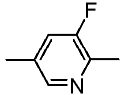 | **Nfl** | 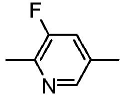 |
| **B** | 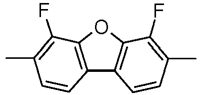 | **B(S)** | 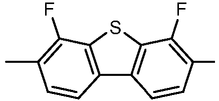 |

**Table B: Linking groups**

| | | | |
|---|---|---|---|
| **E** | -CH₂CH₂- | **Z** | -CO-O- |
| **V** | -CH=CH- | **ZI** | -O-CO- |
| **X** | -CF=CH- | **O** | -CH₂-O- |
| **XI** | -CH=CF- | **OI** | -O-CH₂- |
| **B** | -CF=CF- | **Q** | -CF₂-O- |
| **T** | -C≡C- | **QI** | -O-CF₂- |
| **W** | -CF₂CF₂- | | |

**Table C: End groups**

| **Left-hand side** | **Right-hand side** | | |
|---|---|---|---|
| | **Use alone** | | |
| **-n-** | CₙH₂ₙ₊₁- | **-n** | -CₙH₂ₙ₊₁ |
| **-nO-** | CₙH₂ₙ₊₁-O- | **-On** | -O-CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CₙH₂ₙ₊₁- | **-Vn** | -CH=CH-CₙH₂ₙ₊₁ |
| **-nVm-** | CₙH₂ₙ₊₁-CH=CH-CₘH₂ₘ- | **-nVm** | -CₙH₂ₙ-CH=CH-CₘH₂ₘ₊₁ |
| **-N-** | N≡C- | **-N** | -C≡N |
| **-S-** | S=C=N- | **-S** | -N=C=S |
| -**F-** | F- | **-F** | -F |
| **-Cl**- | Cl- | **-Cl** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O- | **-OM** | -OCFH₂ |
| **-DO-** | CF₂HO- | **-OD** | -OCF₂H |
| **-TO-** | CF₃O- | **-OT** | -OCF₃ |
| **-OXF-** | CF₂=CH-O- | **-OXF** | -O-CH=CF₂ |
| **-A-** | H-C≡C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |

| **Use together with one another and with others** | | | |
|---|---|---|---|
| **-...A...-** | -C≡C- | **-...A...** | -C≡C- |
| **-...V...-** | CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

in which n and m each denote integers, and the three dots "..." are placeholders for other abbreviations from this table.

The following table shows illustrative structures together with their respective abbreviations. These are shown in order to illustrate the meaning of the rules for the abbreviations. They furthermore represent compounds which are preferably used.

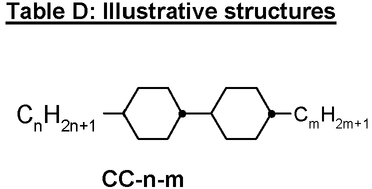

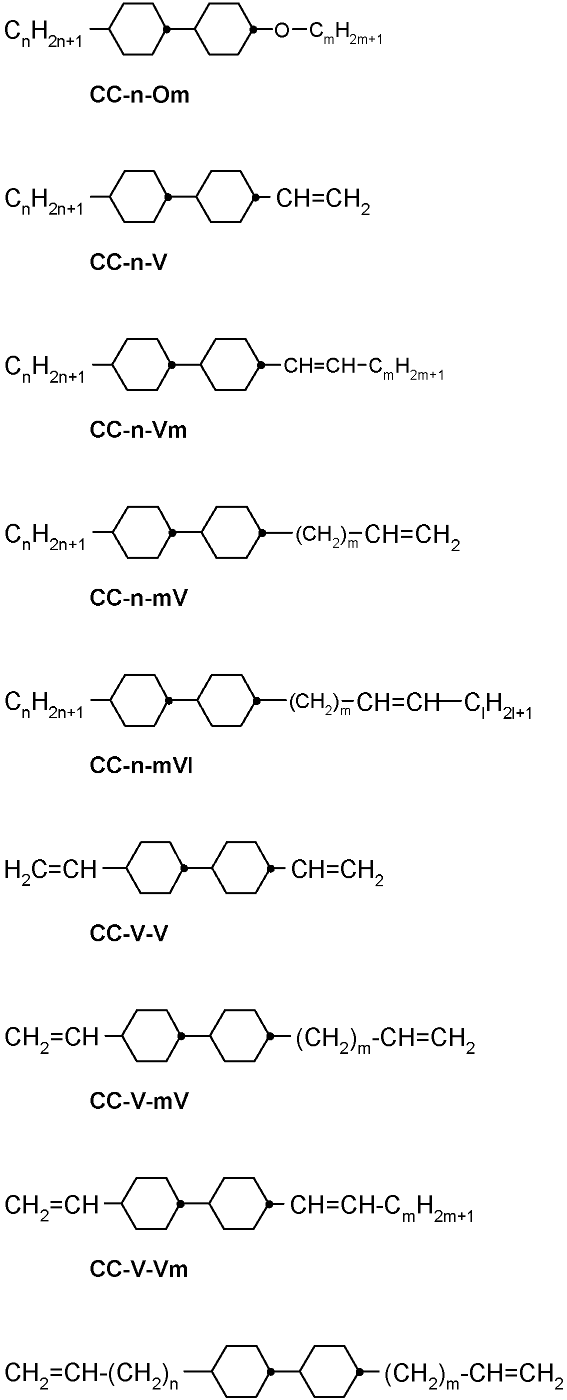

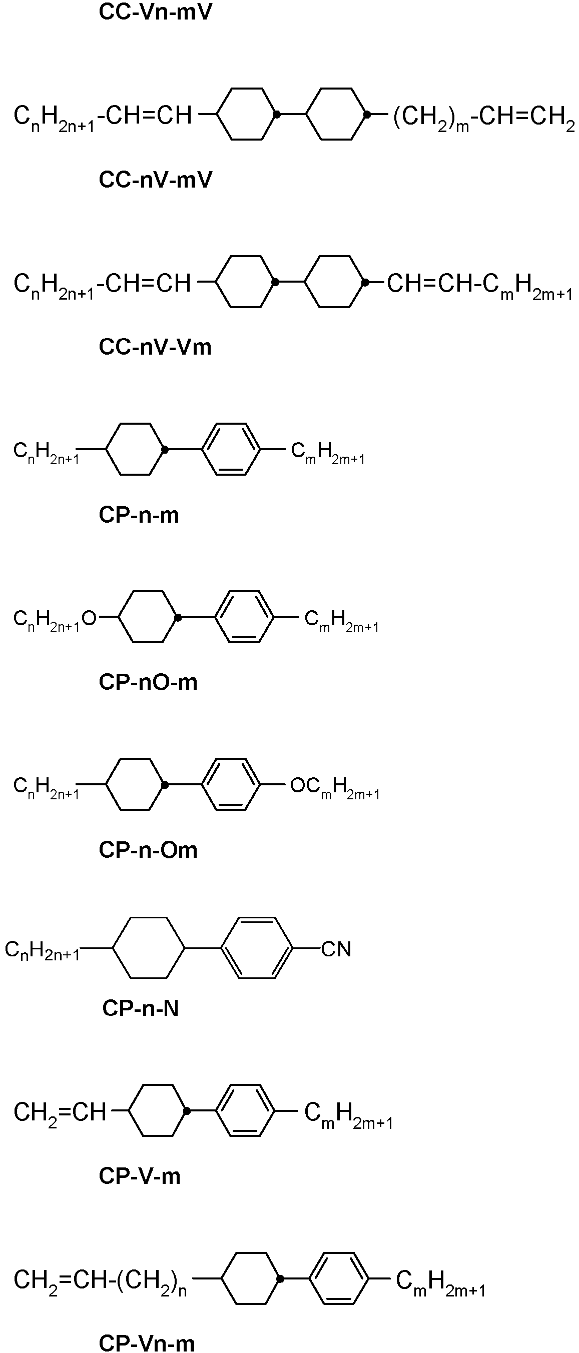

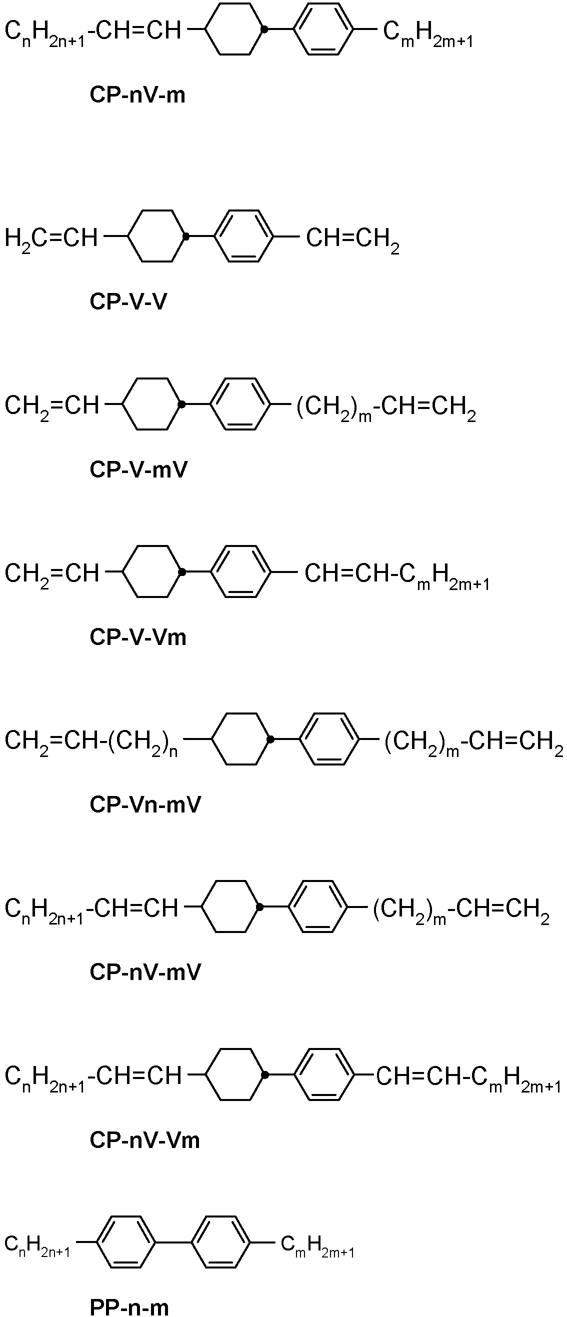

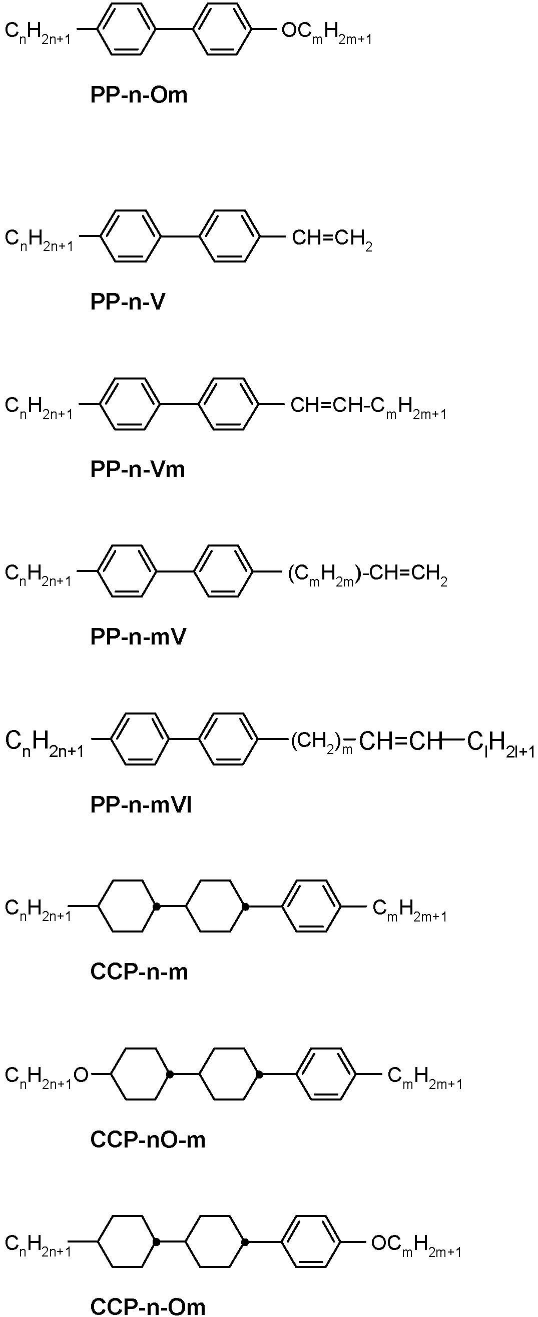

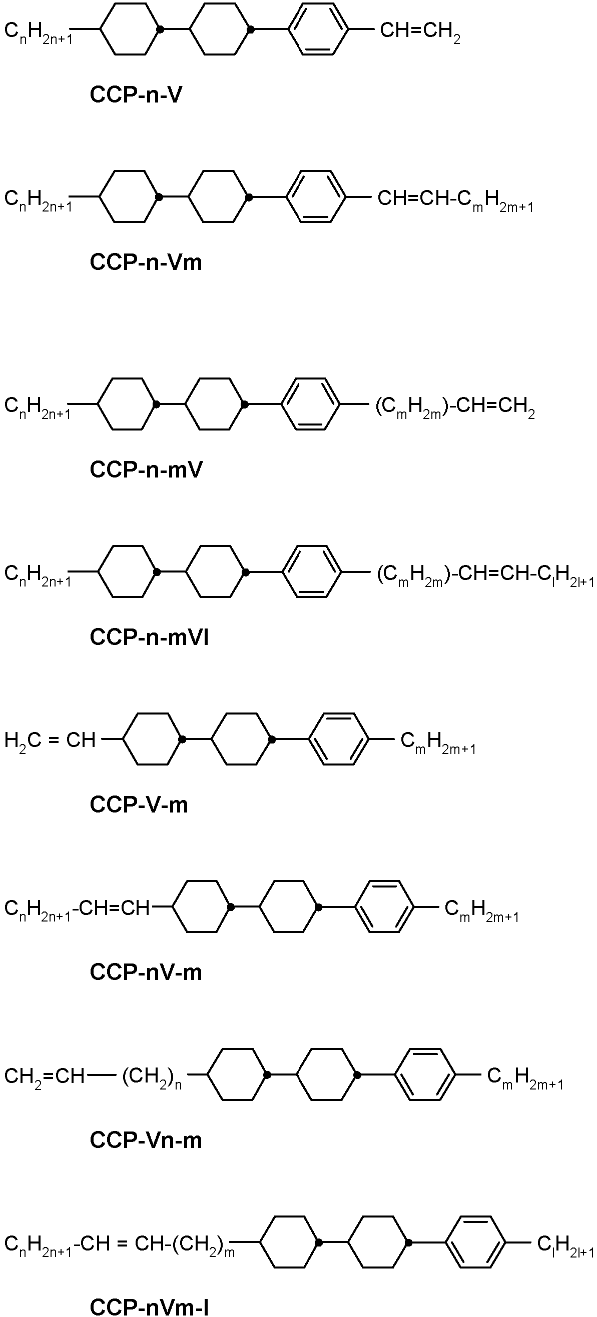

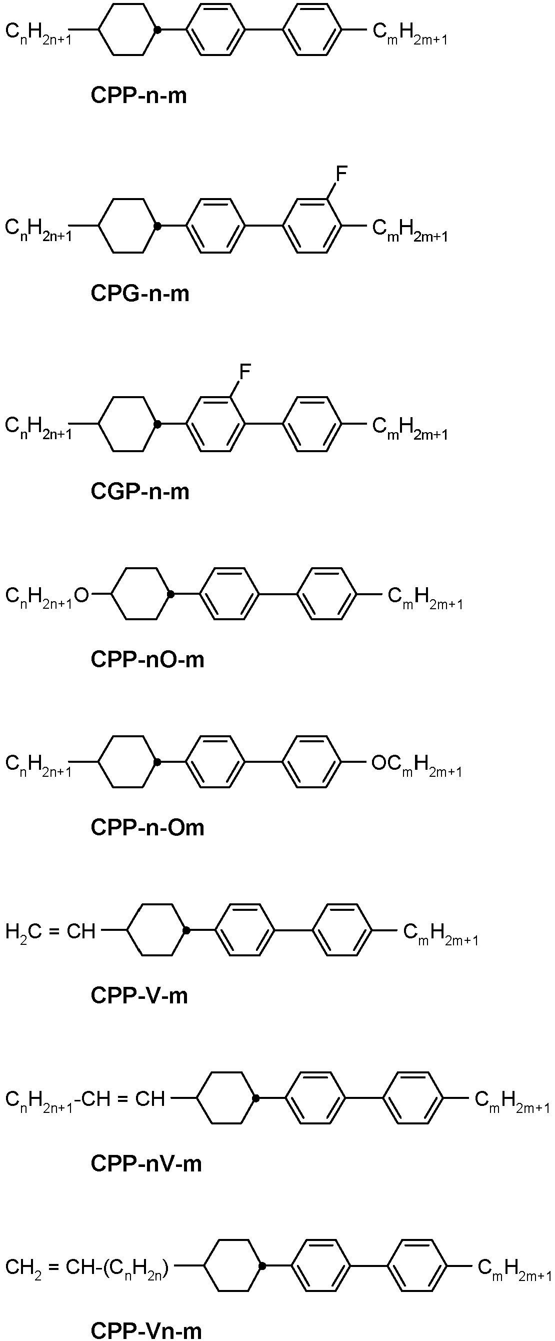

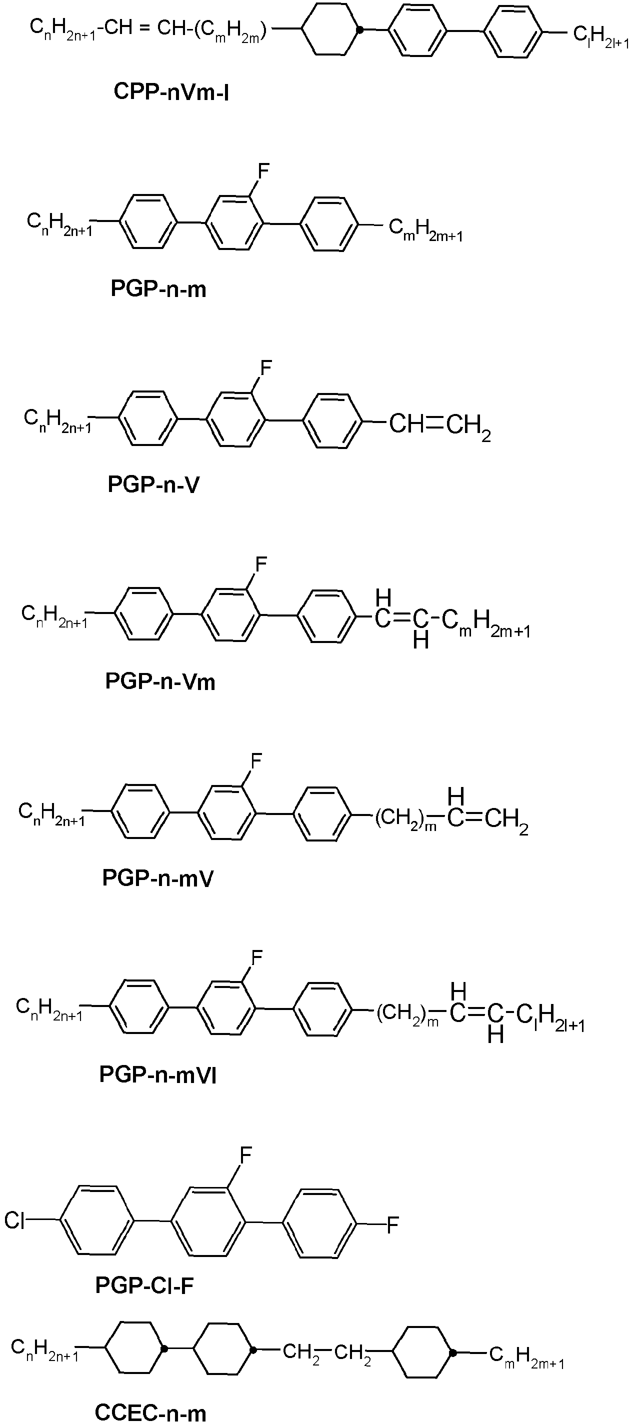

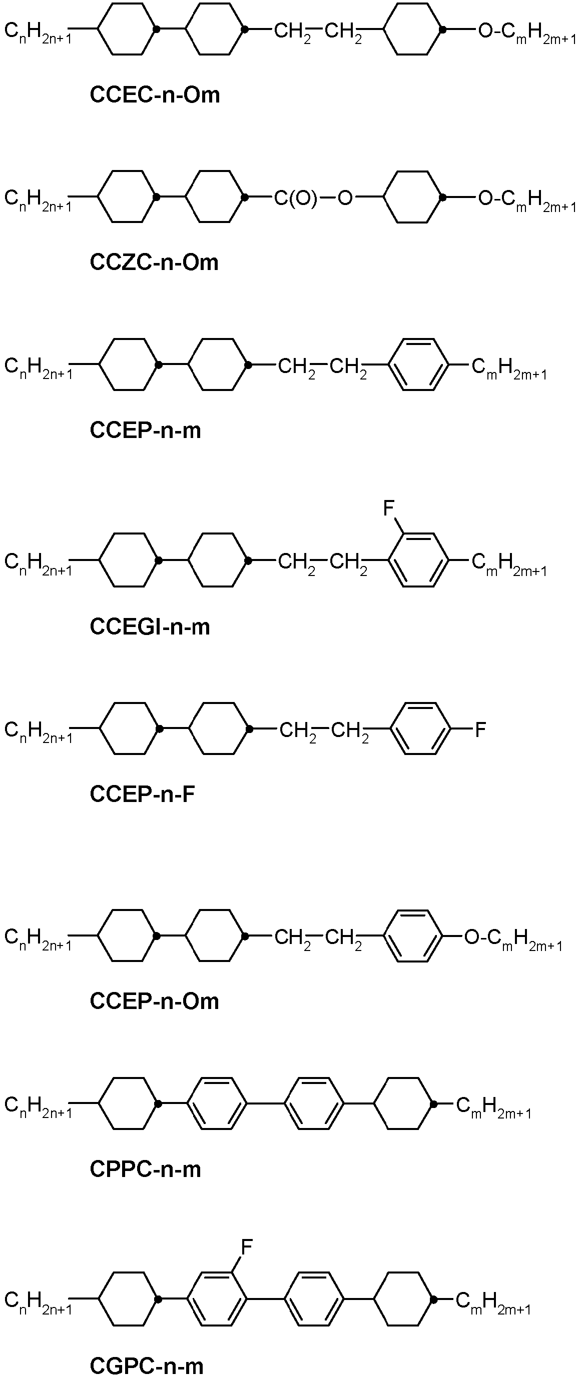

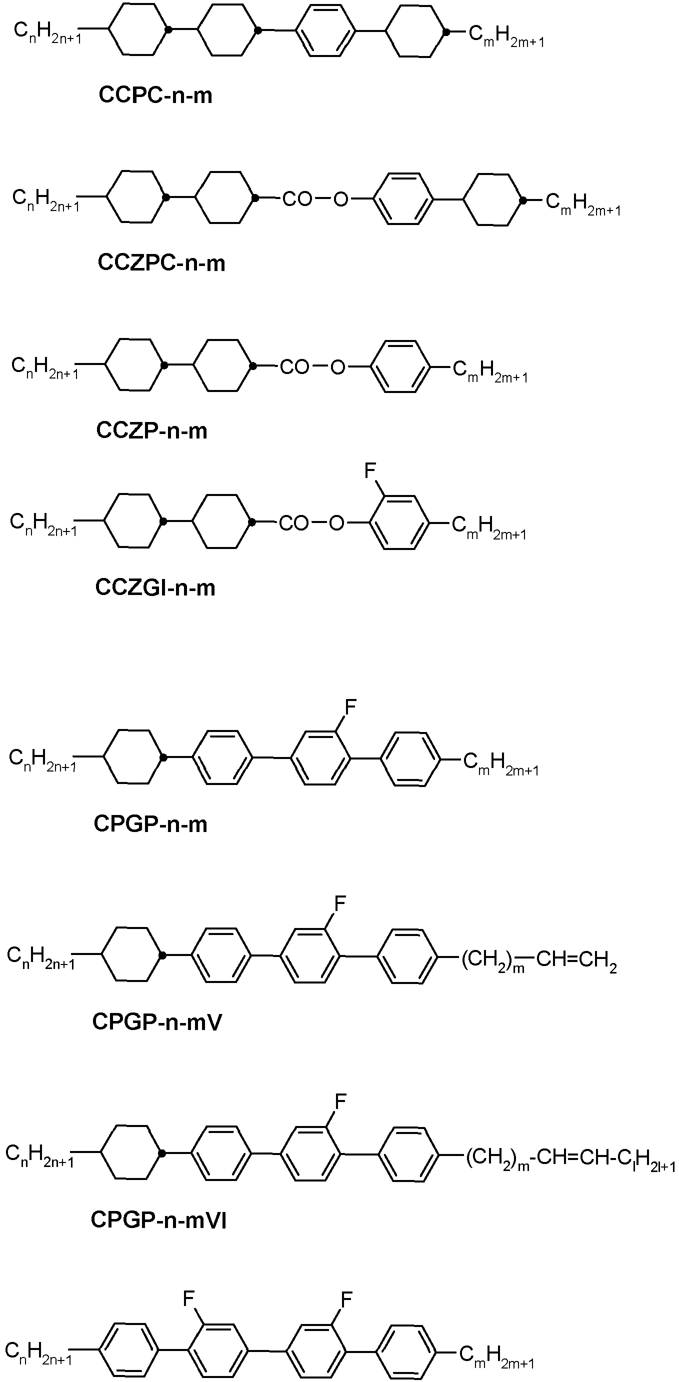

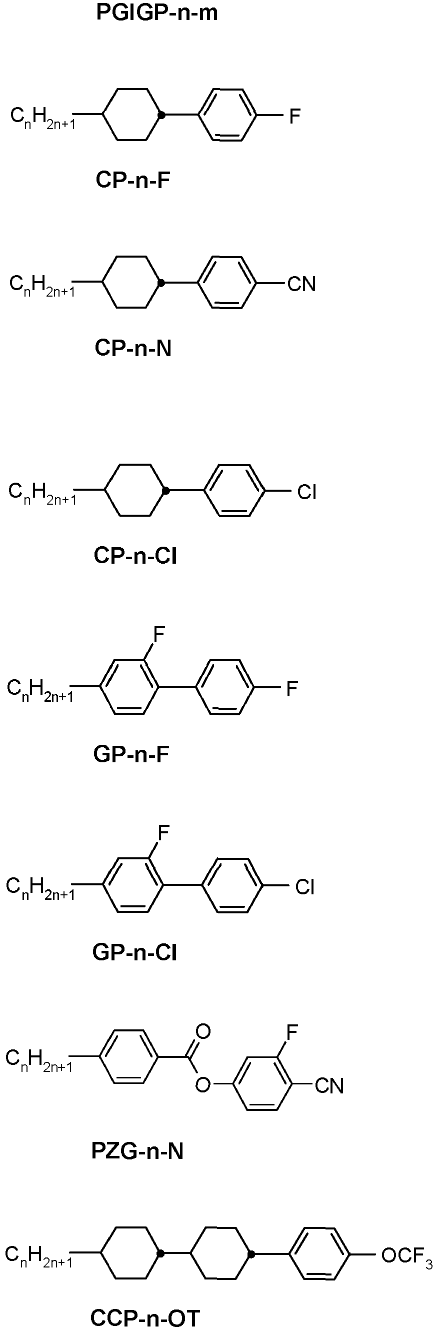

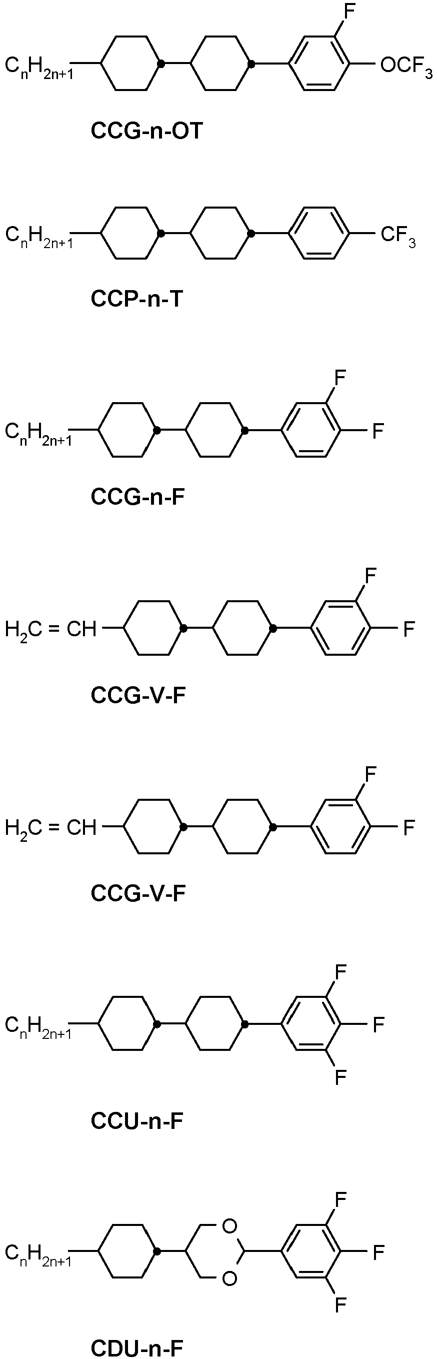

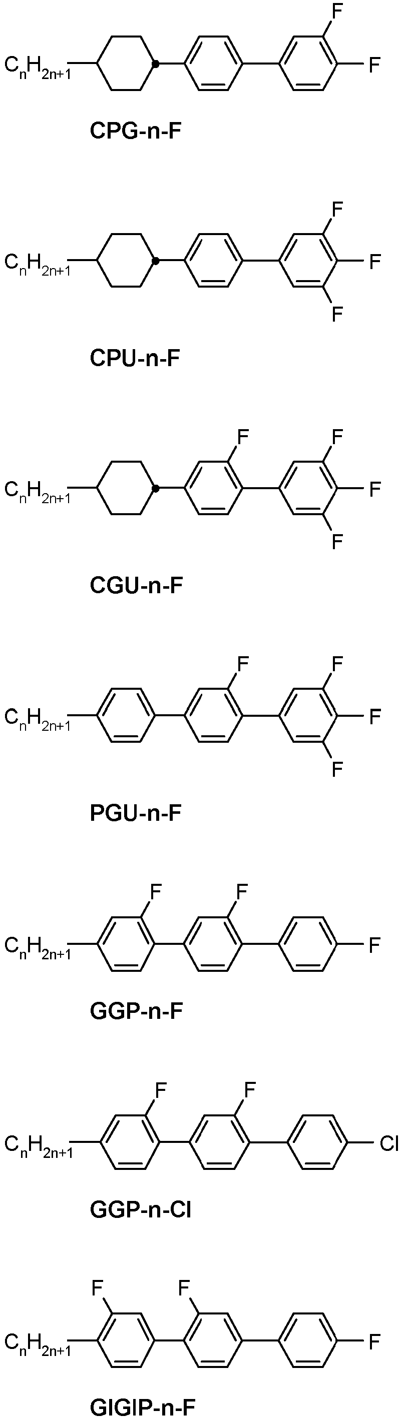

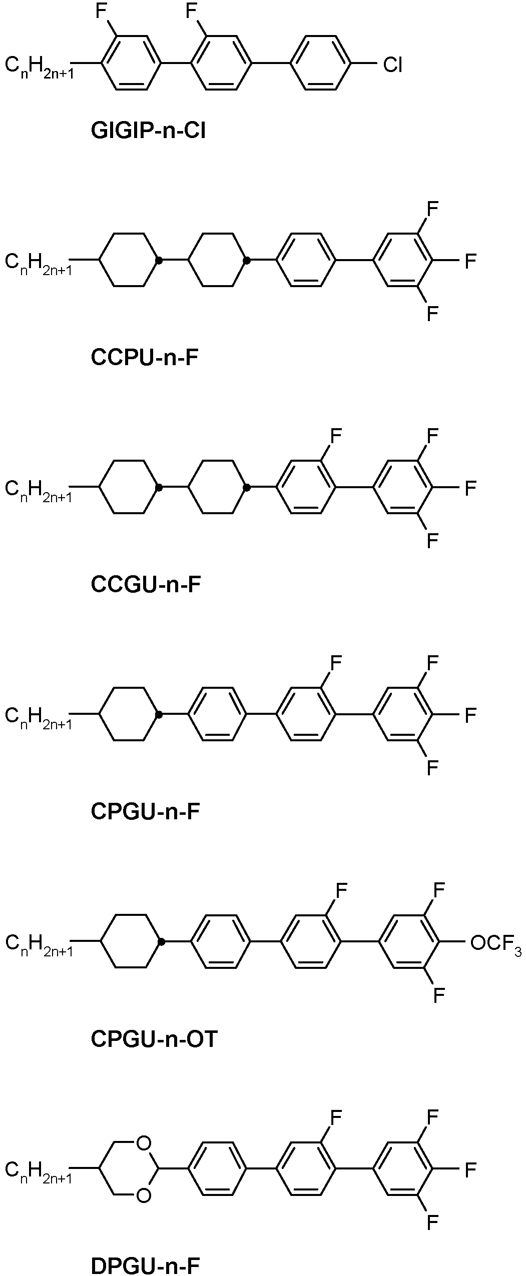

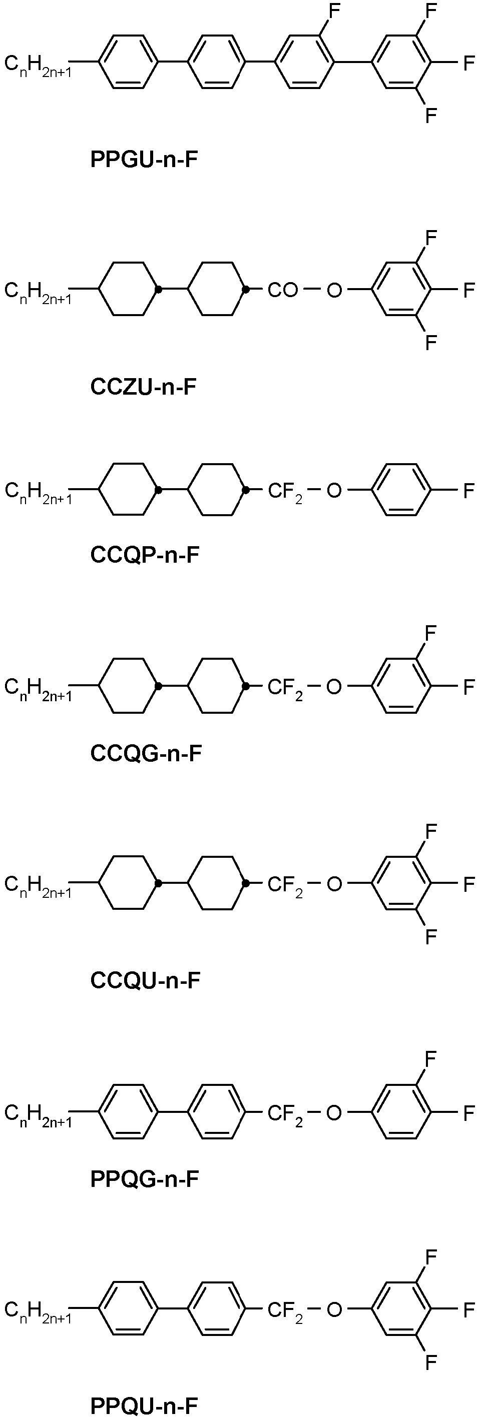

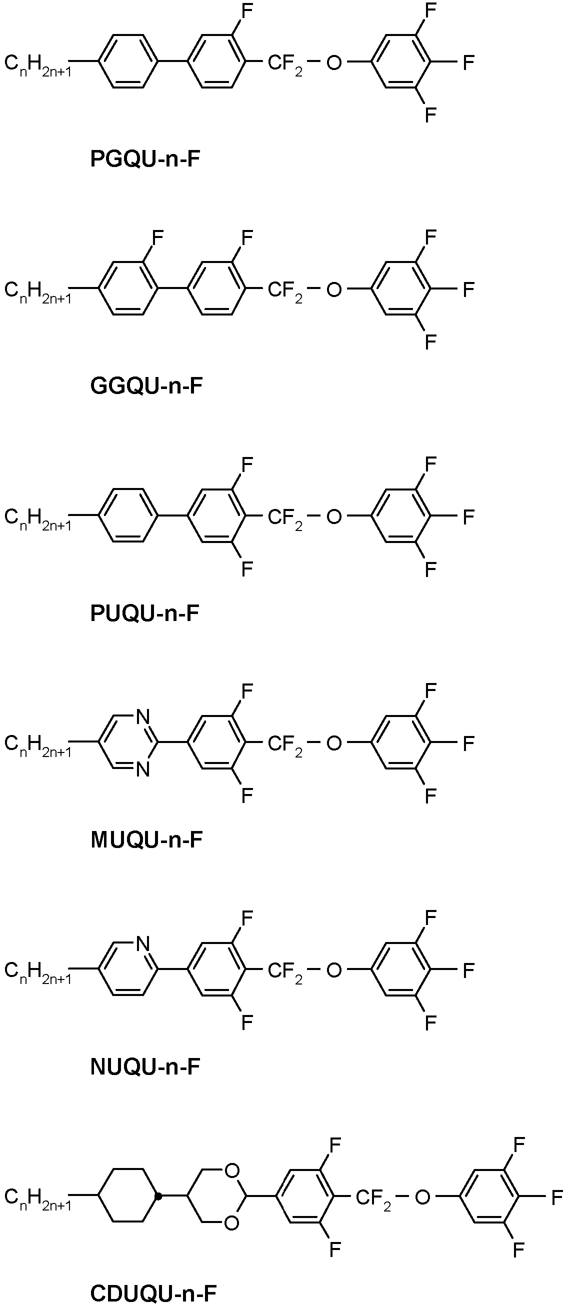

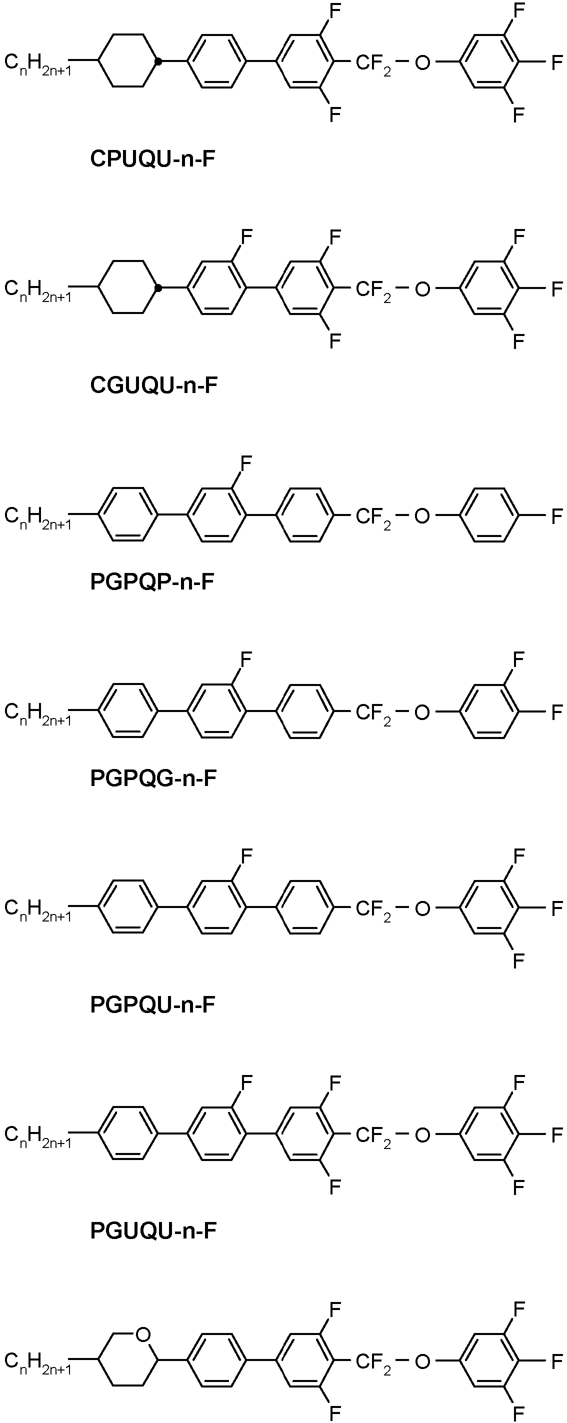

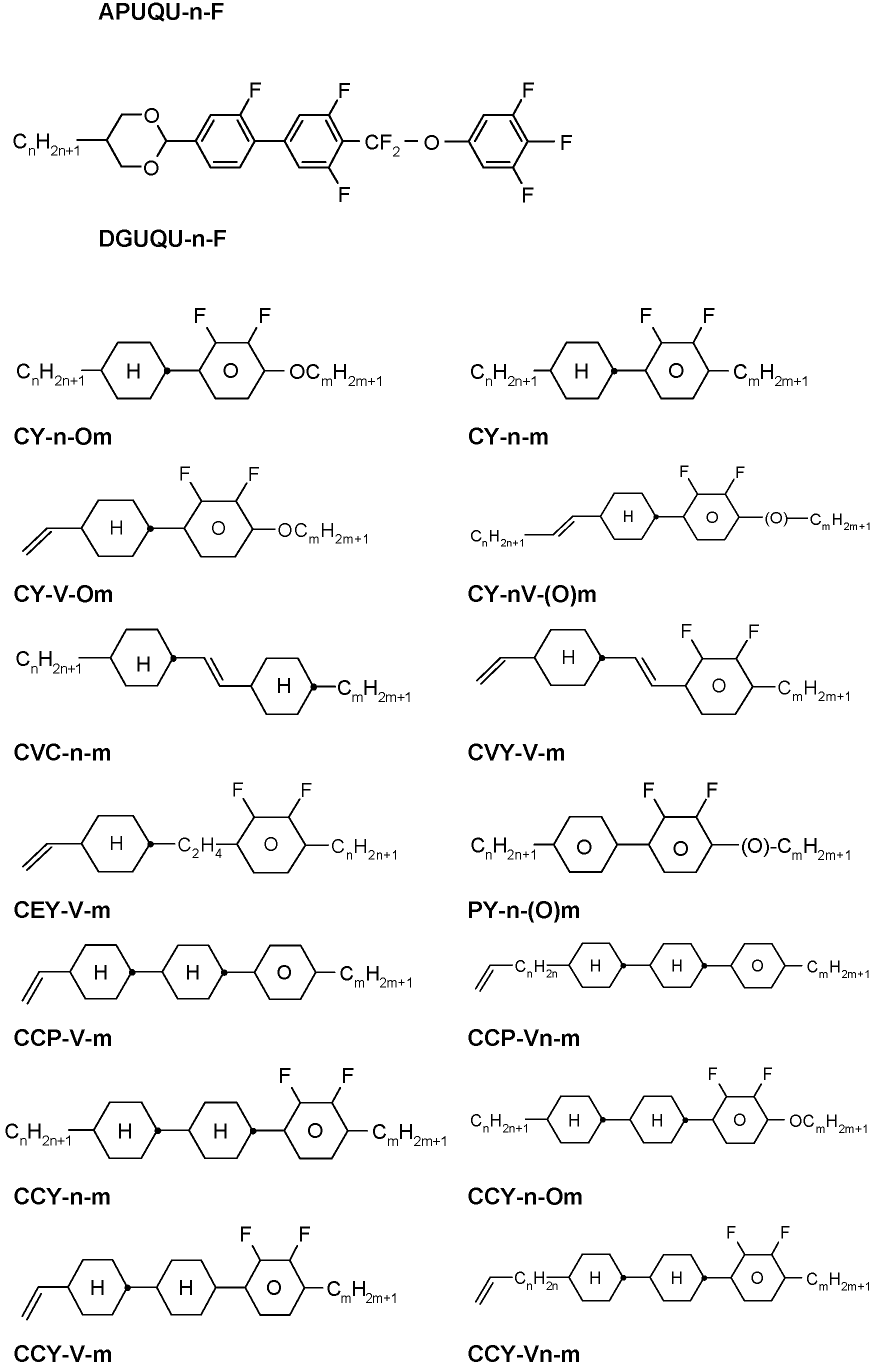

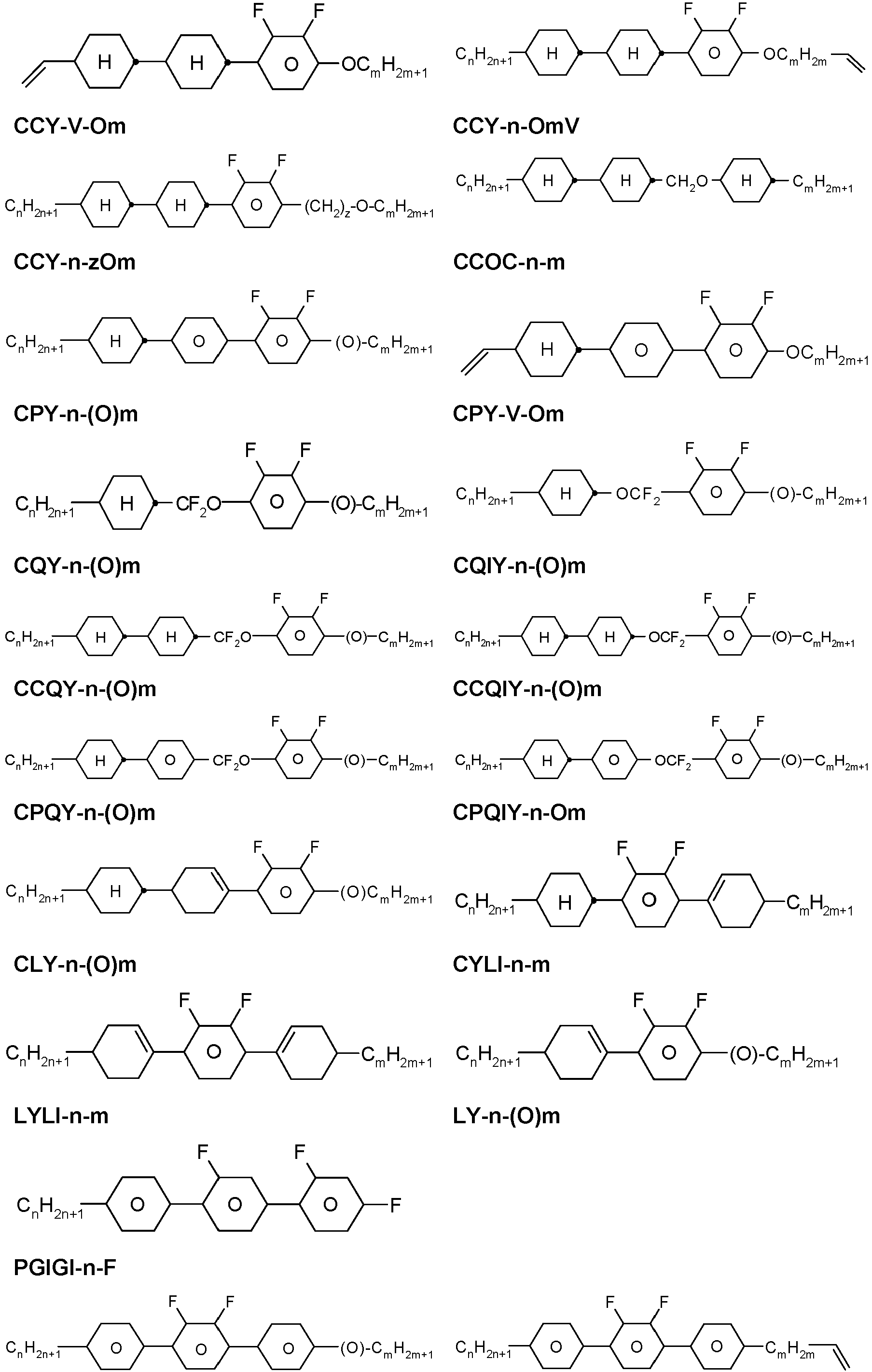

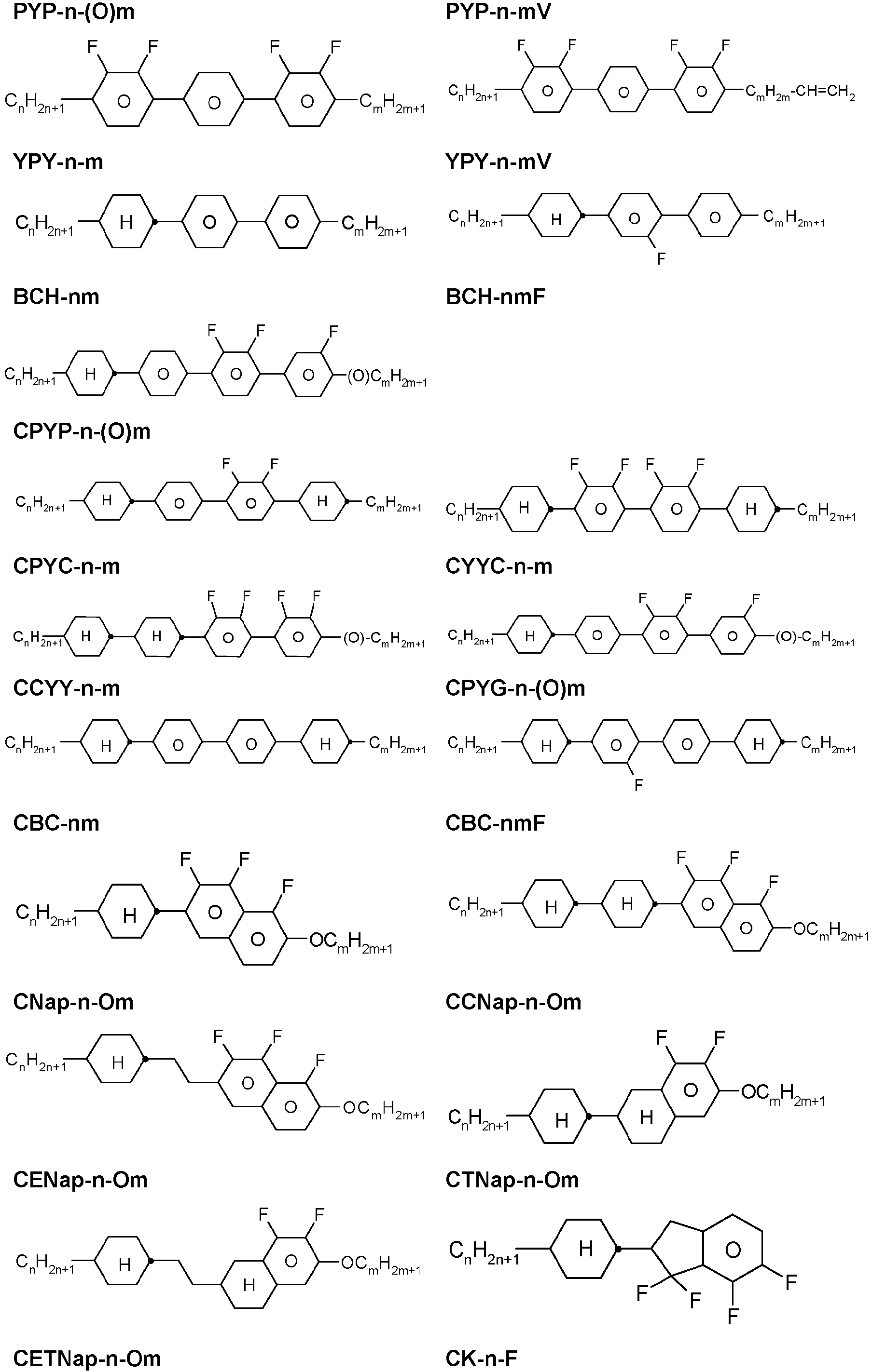

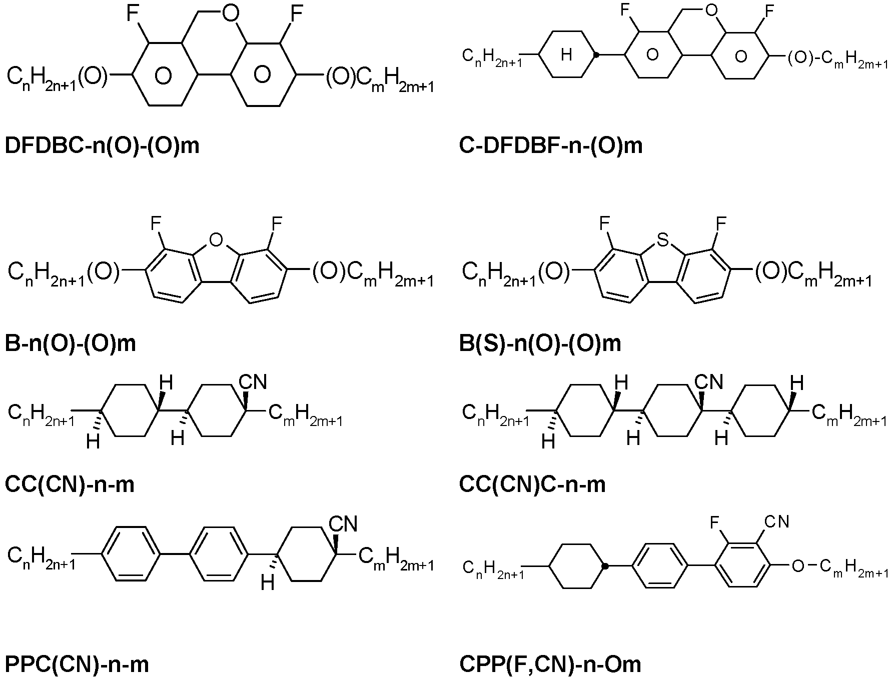

in which n, m and I preferably, independently of one another, denote 1 to 7.

The following table, Table E, shows illustrative compounds which can optionally be used as stabilisers in the mesogenic media according to the present invention.

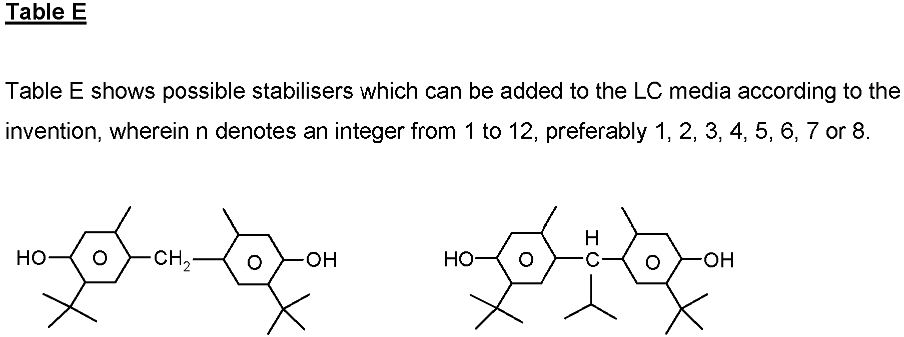

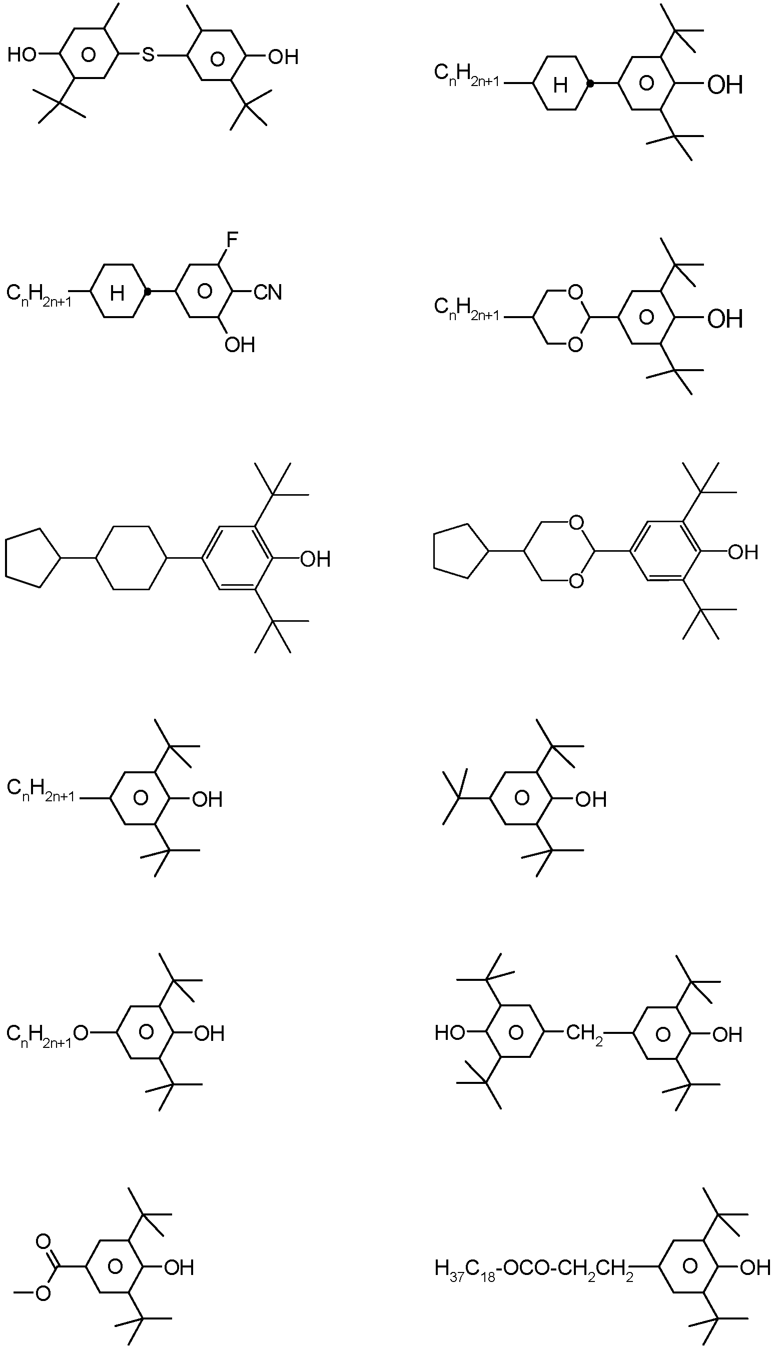

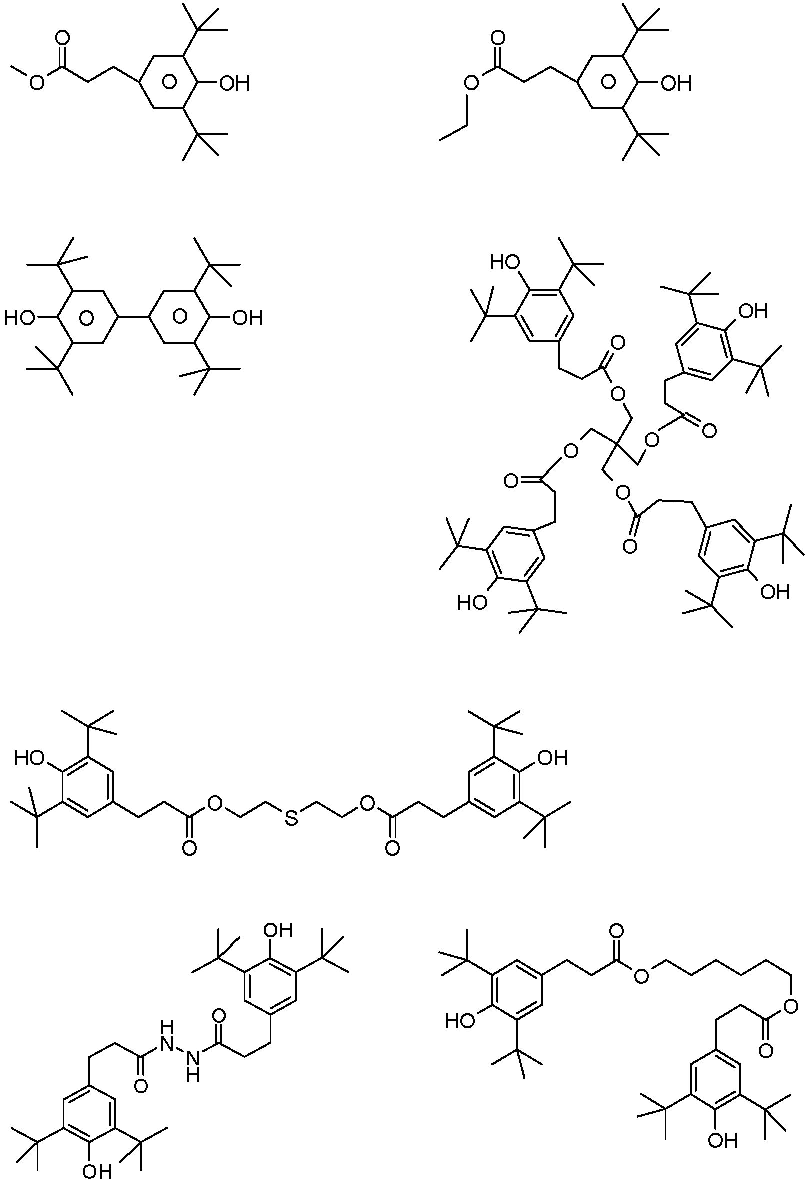

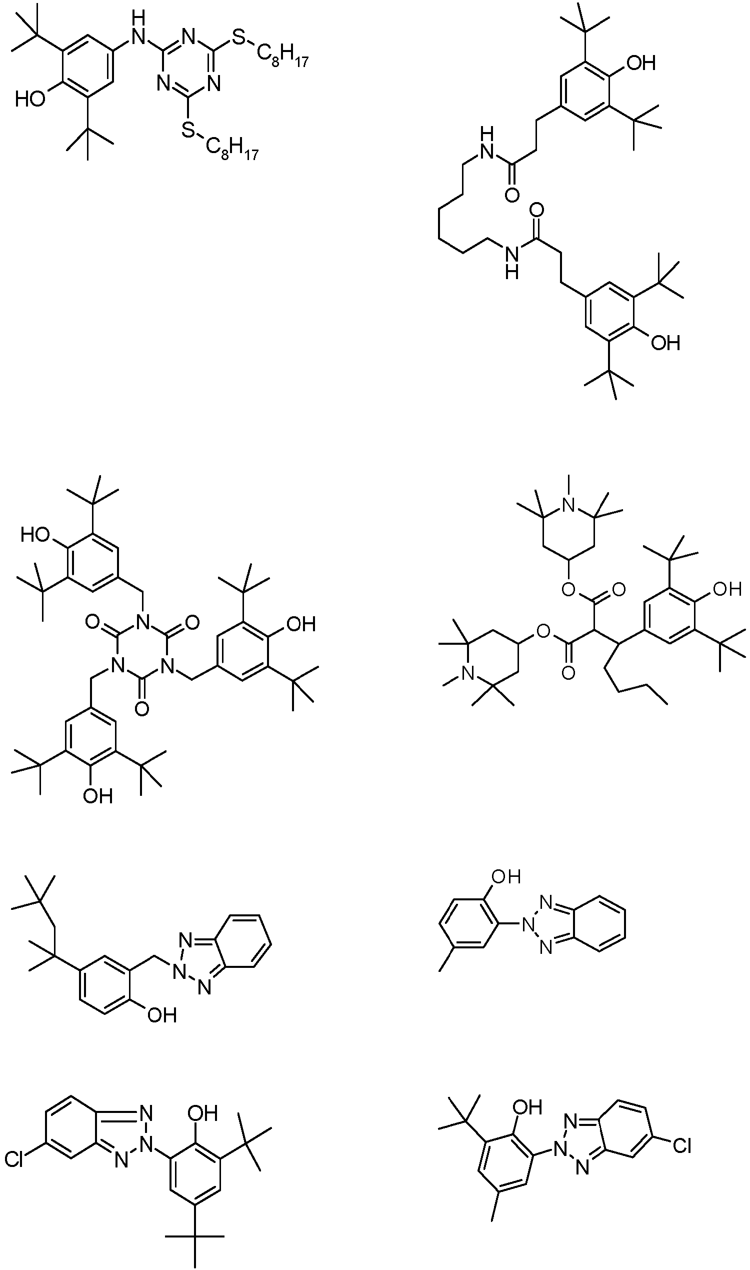

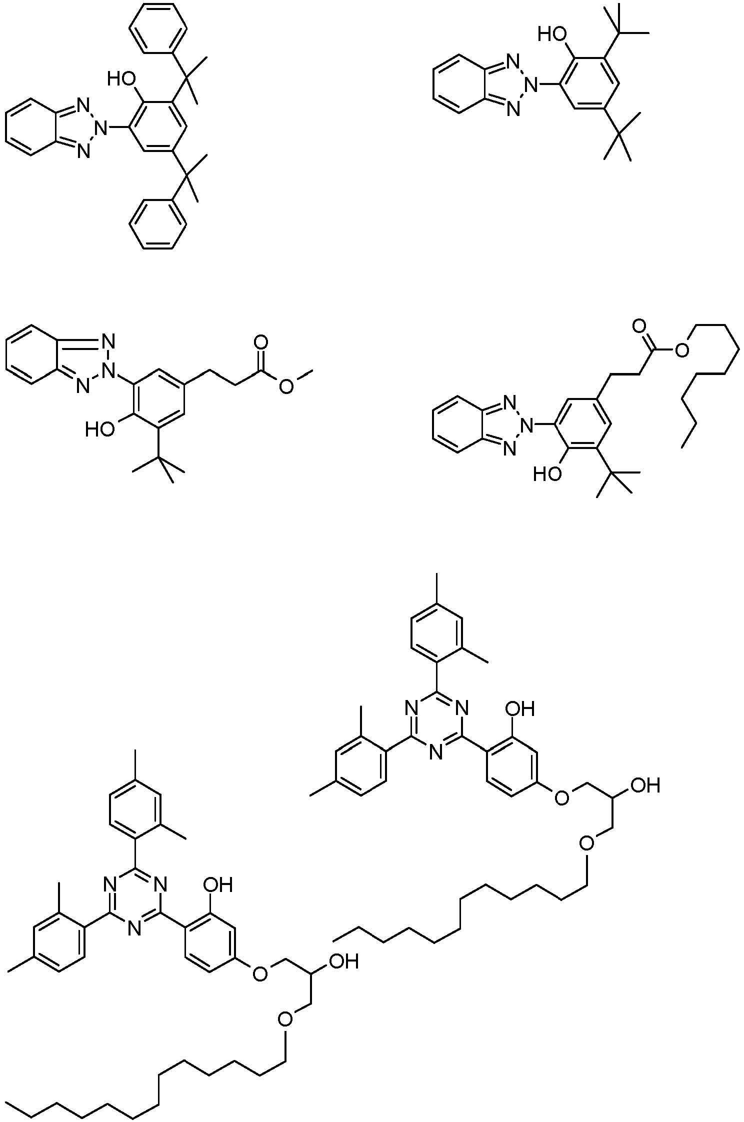

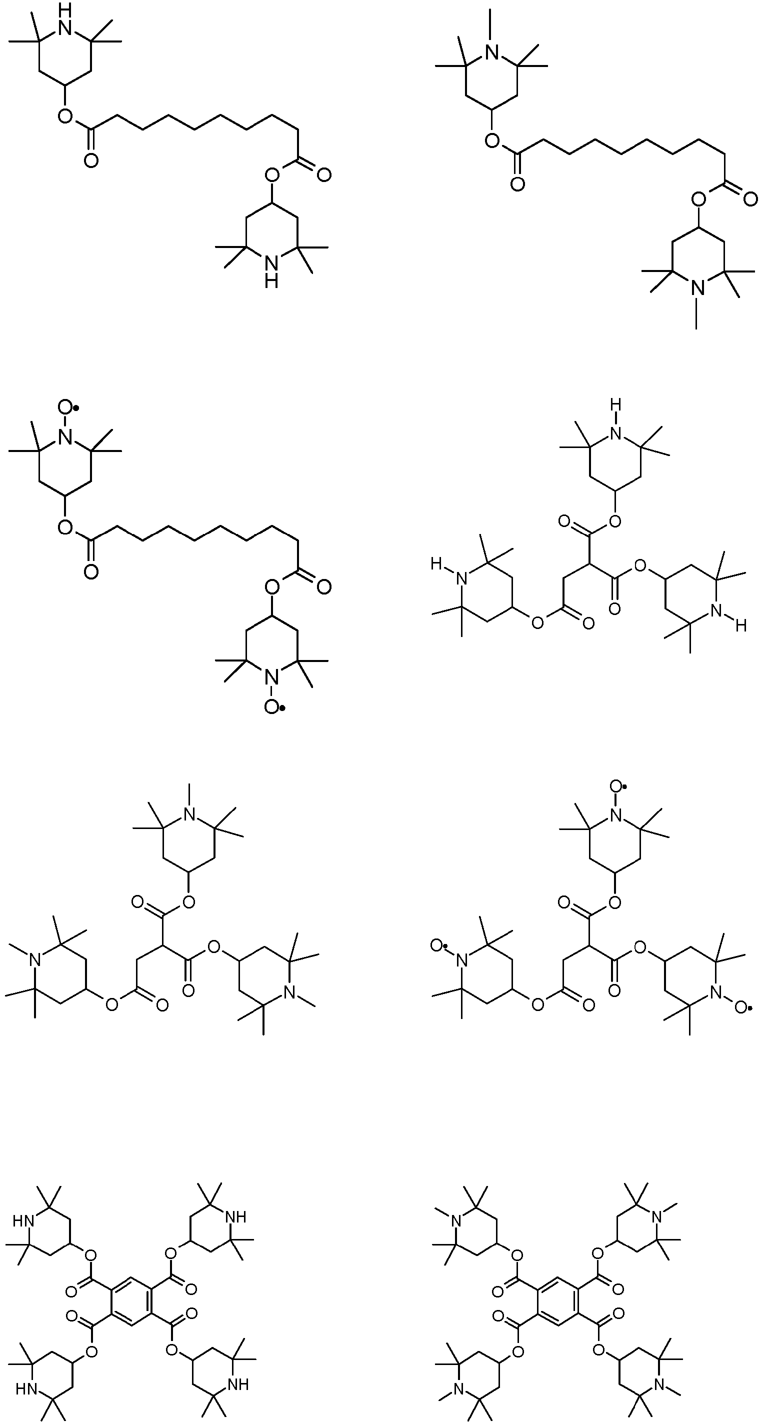

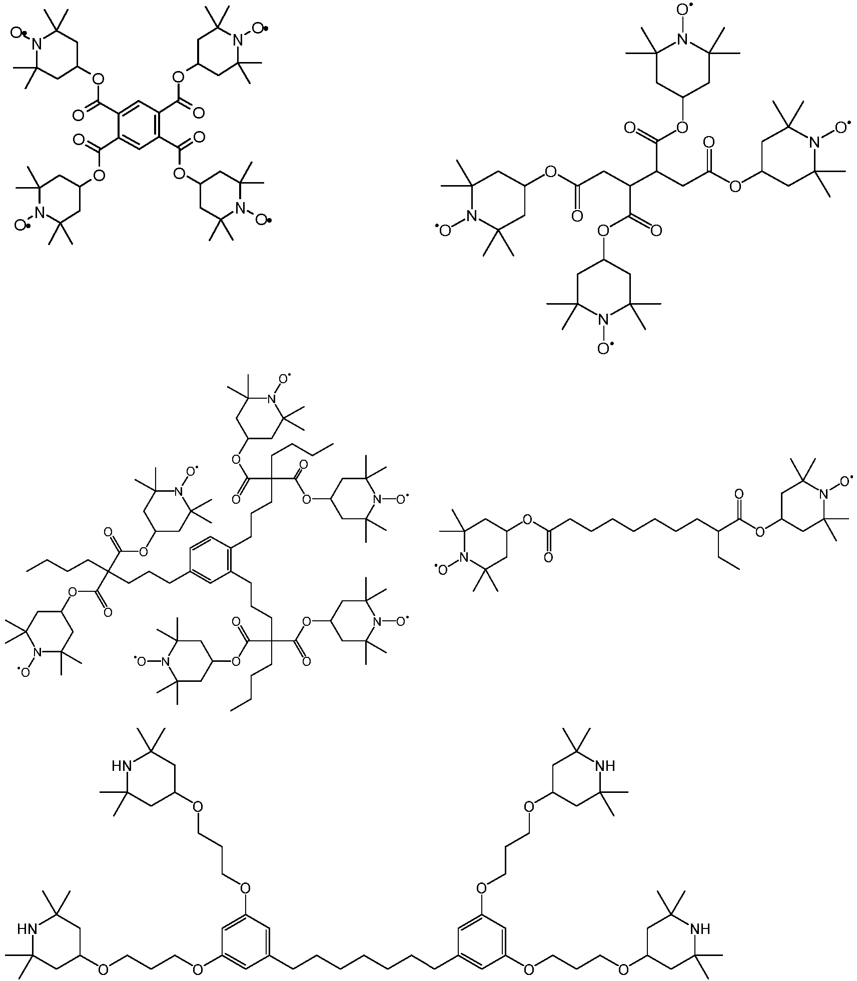

The LC media preferably comprise 0 to 10% by weight, in particular 1 ppm to 5% by weight, particularly preferably 1 ppm to 1% by weight, of stabilisers.

Table F below shows illustrative compounds which can preferably be used as chiral dopants in the mesogenic media according to the present invention.

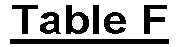

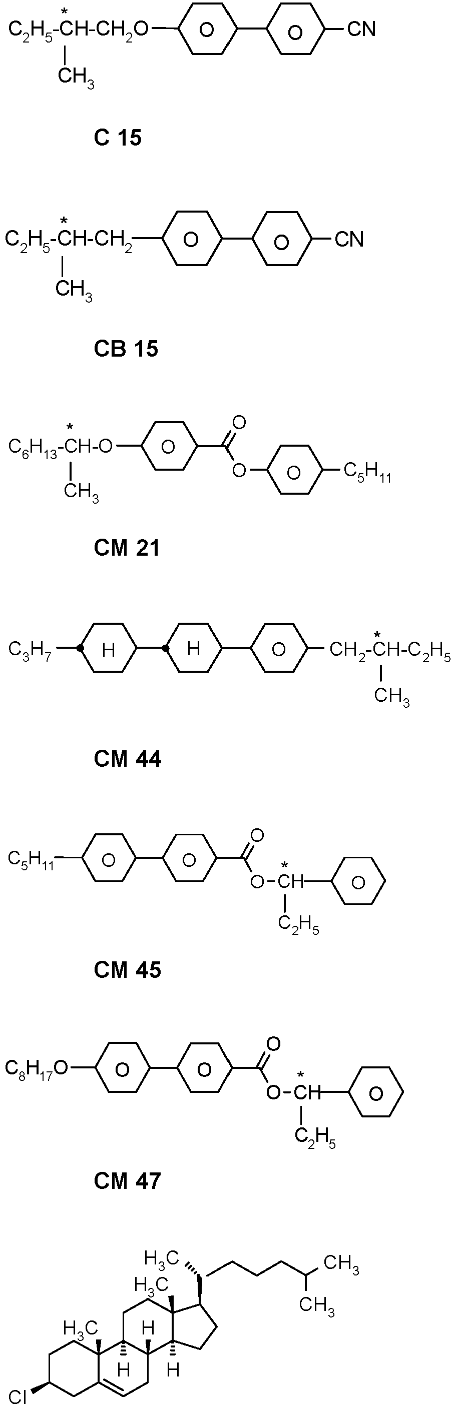

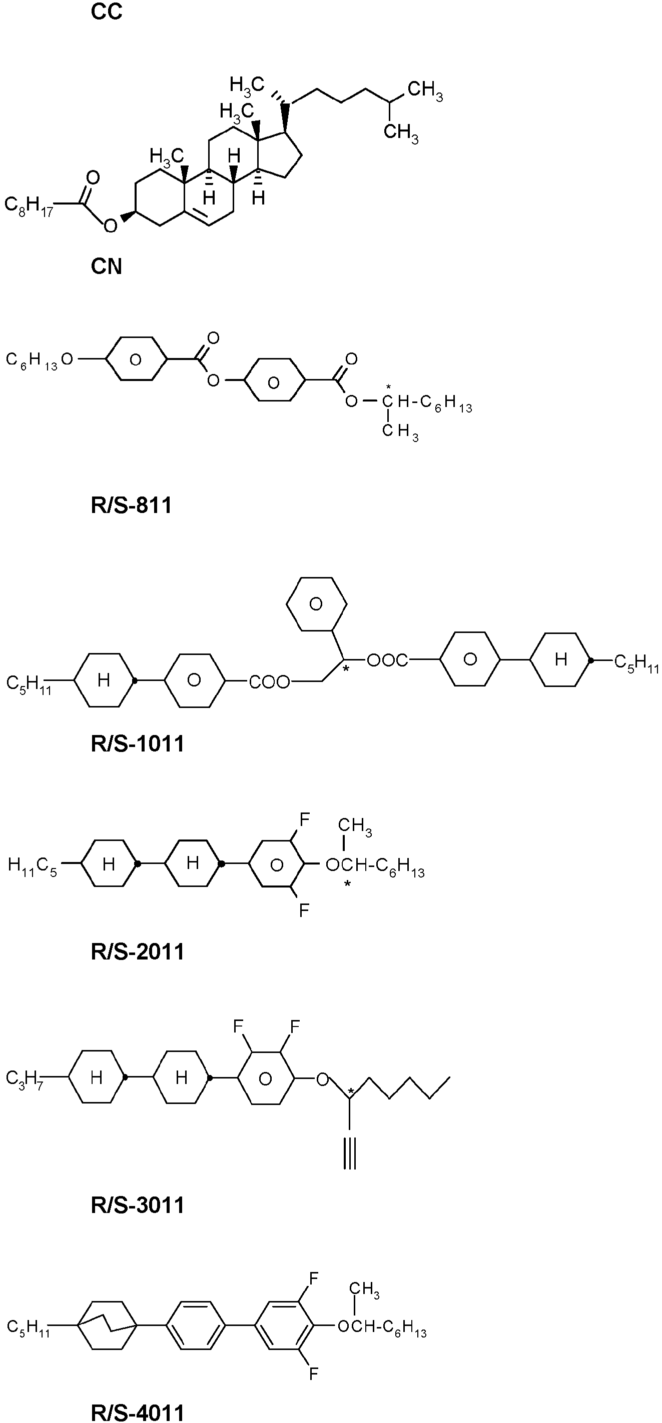

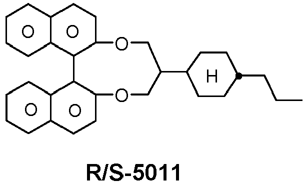

In a preferred embodiment of the present invention, the mesogenic media comprise one or more compounds selected from the group of compounds from Table F.

The mesogenic media according to the present invention preferably comprise two or more, preferably four or more, compounds selected from the group of compounds from the above Tables D, E and F.

The liquid-crystal media according to the present invention preferably comprise seven or more, preferably eight or more, individual compounds selected from the group of compounds from Table D, preferably three or more, particularly preferably four or more having different formulae selected from the formulae shown in Table D.

The LC media according to the invention may also comprise compounds in which, for example, H, C, N, O, Cl or F have been replaced by the corresponding isotopes.

All per cent data and amount ratios given herein are per cent by weight unless explicitly indicated otherwise.

All physical properties are determined in accordance with "Merck Liquid Crystals, Physical Properties of Liquid Crystals", Status Nov. 1997, Merck KGaA, Germany, and apply for a temperature of 20°C, unless explicitly indicated otherwise. The value of Δn is determined at 589 nm, and the value of Δε is determined at 1 kHz, unless explicitly indicated otherwise in each case. nₑ and nₒ are in each case the refractive indices of the extraordinary and ordinary light beam under the conditions indicated above.

The degree of anisotropy R is determined from the value for the extinction coefficient E(p) (extinction coefficient of the mixture in the case of parallel alignment of the molecules to the polarisation direction of the light) and the value for the extinction coefficient of the mixture E(s) (extinction coefficient of the mixture in the case of perpendicular alignment of the molecules to the polarisation direction of the light), in each case at the wavelength of the maximum of the absorption band of the dye in question. If the dye has a plurality of absorption bands, typically the strongest absorption band is selected. The alignment of the molecules of the mixture is achieved by an alignment layer, as known in the art. In order to eliminate influences by liquid-crystalline medium, other absorptions or reflections, each measurement is carried out against an identical mixture comprising no dye, and the value obtained is subtracted.

The measurement is carried out using linear-polarised light whose vibration direction is either parallel to the alignment direction (determination of E(p)) or perpendicular to the alignment direction (determination of E(s)). This can be achieved by a linear polariser, where the polariser is rotated with respect to the device in order to achieve the two different polarisation directions. The measurement of E(p) and E(s) is thus carried out via the rotation of the polarisation direction of the incident polarised light.

The degree of anisotropy R is calculated from the resultant values for E(s) and E(p) in accordance with the formula $R = \left[E\left(p\right)-E\left(s\right)\right] / \left[E\left(p\right)+2*E\left(s\right)\right] ,$ as indicated, *inter alia*, in "Polarized Light in Optics and Spectroscopy", D. S. Kliger et al., Academic Press, 1990. A detailed description of the method for the determination of the degree of anisotropy of liquid-crystalline media comprising a dichroic dye is also given in B. Bahadur, Liquid Crystals - Applications and Uses, Vol. 3, 1992, World Scientific Publishing, Section 11.4.2.

The following examples are merely illustrative of the present invention and they should not be considered as limiting the scope of the invention in any way. The examples and modifications or other equivalents thereof will become apparent to those skilled in the art in the light of the present disclosure.

### Examples

In the Examples,
- Vₒ: denotes threshold voltage, capacitive [V] at 20°C,
- nₑ: denotes extraordinary refractive index at 20°C and 589 nm,
- nₒ: denotes ordinary refractive index at 20°C and 589 nm,
- Δn: denotes optical anisotropy at 20°C and 589 nm,
- ε_{∥}: denotes dielectric permittivity parallel to the director at 20°C and 1 kHz,
- ε_{⊥}: denotes dielectric permittivity perpendicular to the director at 20°C and 1 kHz,
- Δε: denotes dielectric anisotropy at 20°C and 1 kHz,
- cl.p., T(N,I): denotes clearing point [°C],
- γ₁: denotes rotational viscosity measured at 20°C [mPa·s], determined by the rotation method in a magnetic field,
- K₁: denotes elastic constant, "splay" deformation at 20°C [pN],
- K₂: denotes elastic constant, "twist" deformation at 20°C [pN],
- K₃: denotes elastic constant, "bend" deformation at 20°C [pN],

The term "threshold voltage" for the present invention relates to the capacitive threshold (V₀), unless explicitly indicated otherwise. In the Examples, as is generally usual, the optical threshold can also be indicated for 10% relative contrast (V₁₀).

### Reference Example 1

Liquid-crystal Host Mixture H-1 is prepared and characterized with respect to its general physical properties, having the composition and properties as indicated in the following table.

| | | | |
|---|---|---|---|
| CPG-3-F | 8.00% | clearing point [°C]: | 114 |
| CPG-5-F | 8.00% | Δn [589 nm, 20°C]: | 0.130 |
| CPU-5-F | 14.00% | nₑ [589 nm, 20°C]: | 1.62 |
| CPU-7-F | 11.00% | Δε [1 kHz, 20°C]: | 10.0 |
| CP-5-N | 18.00% | ε_{⊥} [1 kHz, 20°C]: | 4.0 |
| CP-7-N | 13.00% | | |
| CCGU-3-F | 7.00% | | |
| CC-3-O3 | 2.00% | | |
| CBC-33F | 4.00% | | |
| CBC-53F | 4.00% | | |
| CBC-55F | 3.00% | | |
| CCZPC-3-3 | 3.00% | | |
| CCZPC-3-4 | 3.00% | | |
| CCZPC-3-5 | 2.00% | | |
| | ∑ 100.00% | | |

### Reference Example 2

Liquid-crystal Host Mixture H-2 is prepared and characterized with respect to its general physical properties, having the composition and properties as indicated in the following table.

| | | | |
|---|---|---|---|
| CPG-2-F | 3.00% | clearing point [°C]: | 114.5 |
| CPG-3-F | 8.00% | Δn [589 nm, 20°C]: | 0.121 |
| CPG-5-F | 8.00% | nₑ [589 nm, 20°C]: | 1.61 |
| CPU-5-F | 10.00% | | |
| CPU-7-F | 10.00% | | |
| CP-6-N | 10.00% | | |
| CP-7-N | 12.00% | | |
| CCGU-3-F | 7.00% | | |
| CC-3-O3 | 6.00% | | |
| CC-5-O1 | 6.00% | | |
| CBC-33F | 4.00% | | |
| CBC-53F | 4.00% | | |
| CBC-55F | 4.00% | | |
| CCZPC-3-3 | 3.00% | | |
| CCZPC-3-4 | 3.00% | | |
| CCZPC-3-5 | 2.00% | | |
| | ∑ 100.00% | | |

### Reference Example 3

Liquid-crystal Host Mixture H-3 is prepared and characterized with respect to its general physical properties, having the composition and properties as indicated in the following table.

| | | | |
|---|---|---|---|
| CPG-3-F | 5.00% | clearing point [°C]: | 114.5 |
| CPG-5-F | 5.00% | Δn [589 nm, 20°C]: | 0.135 |
| CPU-3-F | 15.00% | nₑ [589 nm, 20°C]: | 1.63 |
| CPU-5-F | 15.00% | Δε [1 kHz, 20°C]: | 11.3 |
| CP-3-N | 16.00% | ε_{⊥} [1 kHz, 20°C]: | 4.2 |
| CP-5-N | 16.00% | K₁ [pN, 20°C]: | 13.4 |
| CCGU-3-F | 7.00% | K₃ [pN, 20°C]: | 18.5 |
| CBC-33F | 4.00% | V₀ [V, 20°C]: | 1.15 |
| CBC-53F | 4.00% | | |
| CBC-55F | 4.00% | | |
| CCZPC-3-3 | 3.00% | | |
| CCZPC-3-4 | 3.00% | | |
| CCZPC-3-5 | 3.00% | | |
| | ∑ 100.00% | | |

### Reference Example 4

Liquid-crystal Host Mixture H-4 is prepared and characterized with respect to its general physical properties, having the composition and properties as indicated in the following table.

| | |
|---|---|
| CPG-3-F | 8.00% |
| CPG-5-F | 8.00% |
| CPU-5-F | 14.00% |
| CPU-7-F | 11.00% |
| CP-3-N | 18.00% |
| CP-7-N | 13.00% |
| CCGU-3-F | 7.00% |
| CC-3-O3 | 2.00% |
| CBC-33F | 4.00% |
| CBC-53F | 4.00% |
| CBC-55F | 3.00% |
| CCZPC-3-3 | 3.00% |
| CCZPC-3-4 | 3.00% |
| CCZPC-3-5 | 2.00% |
| | ∑ 100.00% |

### Reference Example 5

Liquid-crystal Host Mixture H-5 is prepared and characterized with respect to its general physical properties, having the composition and properties as indicated in the following table.

| | |
|---|---|
| PGIGI-3-F | 10.00% |
| CPG-2-F | 6.00% |
| CPG-3-F | 7.00% |
| CPG-5-F | 5.00% |
| CPU-5-F | 10.00% |
| CPG-7-F | 10.00% |
| PGU-3-F | 4.00% |
| PGU-5-F | 7.00% |
| CCGU-3-F | 8.00% |
| CPP-3-2 | 4.00% |
| CBC-33F | 3.00% |
| CBC-53F | 3.00% |
| CBC-55F | 3.00% |
| CPGU-3-OT | 5.00% |
| CP-5-N | 15.00% |
| | ∑ 100.00% |

### Reference Example 6

Liquid-crystal Host Mixture H-6 is prepared and characterized with respect to its general physical properties, having the composition and properties as indicated in the following table.

| | | | |
|---|---|---|---|
| CPG-3-F | 7.00% | clearing point [°C]: | 113.8 |
| CPG-5-F | 7.00% | Δn [589 nm, 20°C]: | 0.118 |
| CPU-5-F | 12.00% | nₑ [589 nm, 20°C]: | 1.61 |
| CPU-7-F | 12.00% | | |
| CP-7-N | 11.00% | | |
| CP-8-N | 6.00% | | |
| CP-9-N | 6.00% | | |
| CCGU-3-F | 7.00% | | |
| CC-3-O3 | 6.00% | | |
| CC-5-O1 | 6.00% | | |
| CBC-33F | 4.00% | | |
| CBC-53F | 4.00% | | |
| CBC-55F | 4.00% | | |
| CCZPC-3-3 | 3.00% | | |
| CCZPC-3-4 | 3.00% | | |
| CCZPC-3-5 | 2.00% | | |
| | ∑ 100.00% | | |

### Reference Example 7

Liquid-crystal Host Mixture H-7 is prepared and characterized with respect to its general physical properties, having the composition and properties as indicated in the following table.

| | |
|---|---|
| CPG-3-F | 7.00% |
| CPG-5-F | 7.00% |
| CPU-5-F | 12.00% |
| CPU-7-F | 12.00% |
| CP-8-N | 11.00% |
| CP-9-N | 6.00% |
| CP-10-N | 6.00% |
| CCGU-3-F | 7.00% |
| CC-3-O3 | 6.00% |
| CC-5-O1 | 6.00% |
| CBC-33F | 4.00% |
| CBC-53F | 4.00% |
| CBC-55F | 4.00% |
| CCZPC-3-3 | 3.00% |
| CCZPC-3-4 | 3.00% |
| CCZPC-3-5 | 2.00% |
| | ∑ 100.00% |

### Reference Example 8

Liquid-crystal Host Mixture H-8 is prepared and characterized with respect to its general physical properties, having the composition and properties as indicated in the following table.

| | |
|---|---|
| PGIGI-3-F | 10.00% |
| CPG-2-F | 6.00% |
| CPG-3-F | 7.00% |
| CPG-5-F | 5.00% |
| CPU-5-F | 10.00% |
| CPG-7-F | 10.00% |
| PGU-3-F | 4.00% |
| PGU-5-F | 7.00% |
| CCGU-3-F | 8.00% |
| CPP-3-2 | 4.00% |
| CBC-33F | 3.00% |
| CBC-53F | 3.00% |
| CBC-55F | 3.00% |
| CPGU-3-OT | 5.00% |
| CP-8-N | 15.00% |
| | ∑ 100.00% |

### Reference Example 9

Liquid-crystal Host Mixture H-9 is prepared and characterized with respect to its general physical properties, having the composition and properties as indicated in the following table.

| | |
|---|---|
| CPG-3-F | 5.00% |
| CPG-5-F | 5.00% |
| CPU-3-F | 15.00% |
| CPU-5-F | 15.00% |
| CP-8-N | 16.00% |
| CP-9-N | 16.00% |
| CCGU-3-F | 7.00% |
| CBC-33F | 4.00% |
| CBC-53F | 4.00% |
| CBC-55F | 4.00% |
| CCZPC-3-3 | 3.00% |
| CCZPC-3-4 | 3.00% |
| CCZPC-3-5 | 3.00% |
| | ∑ 100.00% |

### Reference Example 10

Liquid-crystal Host Mixture H-10 is prepared and characterized with respect to its general physical properties, having the composition and properties as indicated in the following table, wherein Compound I-8 corresponds to the compound of formula I-8 described above.

| | |
|---|---|
| CPG-3-F | 8.00% |
| CPG-5-F | 8.00% |
| CPU-5-F | 14.00% |
| CPU-7-F | 11.00% |
| CP-8-N | 18.00% |
| Compound I-8 | 13.00% |
| CCGU-3-F | 7.00% |
| CC-3-O3 | 2.00% |
| CBC-33F | 4.00% |
| CBC-53F | 4.00% |
| CBC-55F | 3.00% |
| CCZPC-3-3 | 3.00% |
| CCZPC-3-4 | 3.00% |
| CCZPC-3-5 | 2.00% |
| | ∑ 100.00% |

### Reference Example 11

Liquid-crystal Host Mixture H-11 is prepared and characterized with respect to its general physical properties, having the composition and properties as indicated in the following table.

| | |
|---|---|
| CPG-3-F | 7.00% |
| CPG-5-F | 7.00% |
| CPU-5-F | 12.00% |
| CPU-7-F | 12.00% |
| CP-10-N | 11.00% |
| CP-11-N | 5.00% |
| CP-12-N | 5.00% |
| CCGU-3-F | 7.00% |
| CC-3-O3 | 7.00% |
| CC-5-O1 | 7.00% |
| CBC-33F | 4.00% |
| CBC-53F | 4.00% |
| CBC-55F | 4.00% |
| CCZPC-3-3 | 3.00% |
| CCZPC-3-4 | 3.00% |
| CCZPC-3-5 | 2.00% |
| | ∑ 100.00% |

### Reference Example 12

Liquid-crystal Host Mixture H-12 is prepared and characterized with respect to its general physical properties, having the composition and properties as indicated in the following table.

| | | | |
|---|---|---|---|
| CPG-3-F | 5.00% | clearing point [°C]: | 114.7 |
| CPU-5-F | 6.00% | Δn [589 nm, 20°C]: | 0.104 |
| CPU-7-F | 6.00% | nₑ [589 nm, 20°C]: | 1.59 |
| CP-7-N | 11.00% | Δε [1 kHz, 20°C]: | 6.2 |
| CP-8-N | 6.00% | ε_{⊥} [1 kHz, 20°C]: | 3.3 |
| CCGU-3-F | 7.00% | | |
| CCG-V-F | 15.00% | | |
| CC-3-V | 16.00% | | |
| CCZPC-3-3 | 3.00% | | |
| CCZPC-3-4 | 3.00% | | |
| CCZPC-3-5 | 2.00% | | |
| CCP-V-1 | 10.00% | | |
| CCP-V2-1 | 10.00% | | |
| | ∑ 100.00% | | |

### Reference Example 13

Liquid-crystal Host Mixture H-13 is prepared and characterized with respect to its general physical properties, having the composition and properties as indicated in the following table.

| | | | |
|---|---|---|---|
| CPU-5-F | 11.00% | clearing point [°C]: | 116.6 |
| CPU-7-F | 11.00% | Δn [589 nm, 20°C]: | 0.111 |
| CCG-V-F | 8.00% | Δε [1 kHz, 20°C]: | 7.7 |
| CP-7-N | 11.00% | | |
| CP-8-N | 6.00% | | |
| CP-9-N | 6.00% | | |
| CCGU-3-F | 7.00% | | |
| CC-3-O3 | 4.00% | | |
| CC-5-O1 | 3.00% | | |
| CCZPC-3-3 | 3.00% | | |
| CCZPC-3-4 | 3.00% | | |
| CCZPC-3-5 | 2.00% | | |
| CCP-V-1 | 13.00% | | |
| CCP-V2-1 | 12.00% | | |
| | ∑ 100.00% | | |

### Reference Example 14

Liquid-crystal Host Mixture H-14 is prepared and characterized with respect to its general physical properties, having the composition and properties as indicated in the following table.

| | |
|---|---|
| CPG-3-F | 2.00% |
| CPU-5-F | 8.00% |
| CPU-7-F | 8.00% |
| CP-7-N | 11.00% |
| CP-8-N | 5.00% |
| CP-9-N | 5.00% |
| CCG-V-F | 19.00% |
| CC-3-V | 20.00% |
| CCP-V-1 | 12.00% |
| CCP-V2-1 | 10.00% |
| | ∑ 100.00% |

### Comparative Example 1

A comparative mixture CM-1 is prepared by mixing 89.65% of mixture H-1 described in Reference Example 1 above with 0.10% of the compound of formula 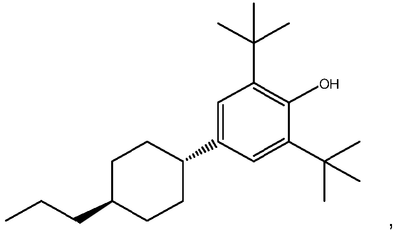 which in the following will be referred to as ST-1, 0.95% of the compound of formula 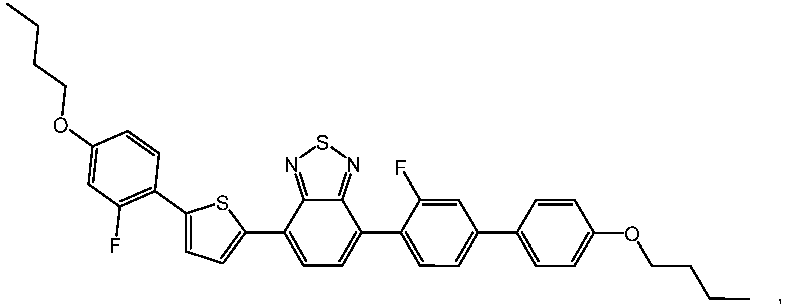 which in the following will be referred to as D-1, 1.90% of the compound of formula 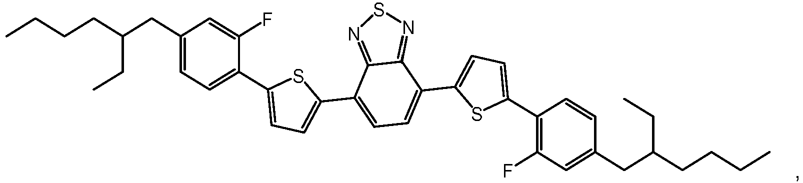 which in the following will be referred to as D-2, 2.30% of the compound of formula 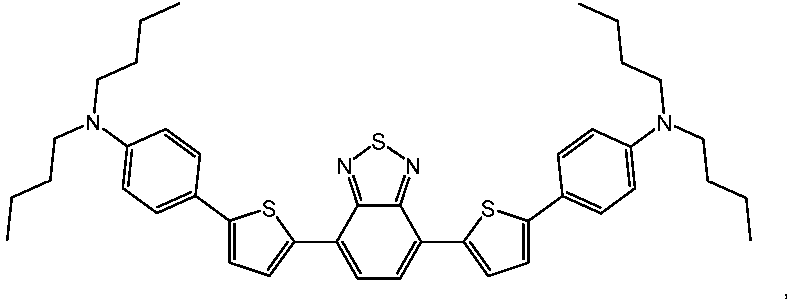 which in the following will be referred to as D-3, 1.80% of the compound of formula 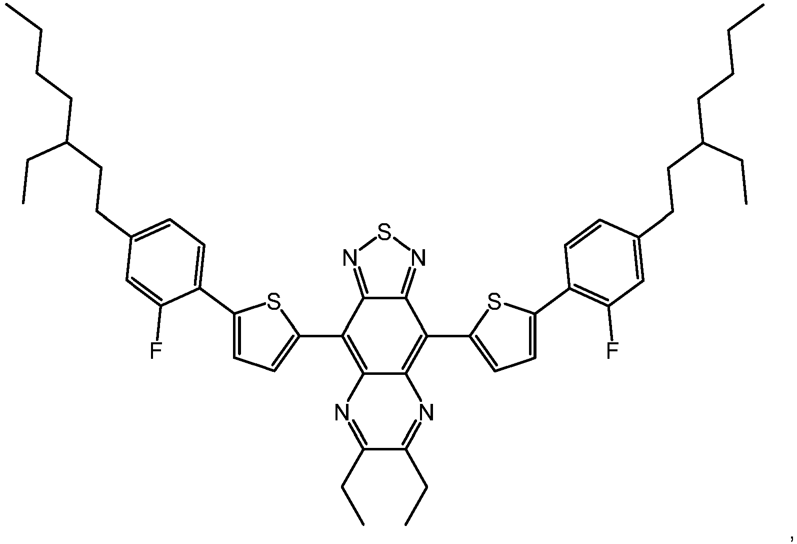 which in the following will be referred to as D-6, 2.20% of the compound of formula 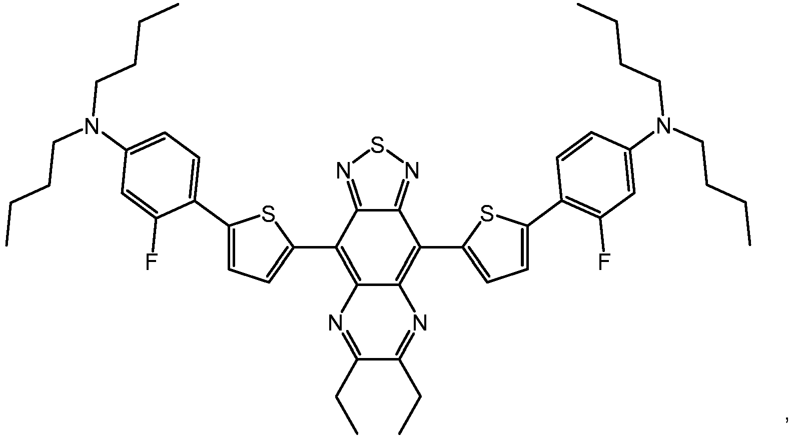 which in the following will be referred to as D-9, and 1.10% of the compound of formula 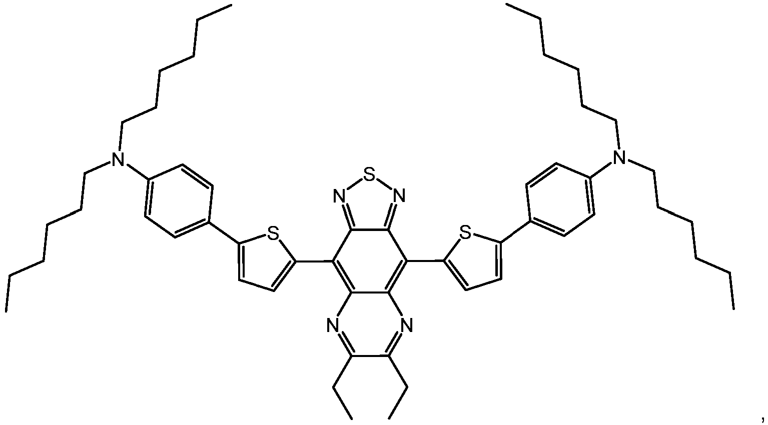 which in the following will be referred to as D-10.

A comparative mixture CM-1.1 is prepared by mixing 99.618% of mixture CM-1 with 0.382% of the compound of formula R-5011 as described in Table F above.

A comparative mixture CM-1.2 is prepared by mixing 99.847% of mixture CM-1 with 0.153% of the compound of formula R-5011 as described in Table F above.

The mixtures CM-1.1 and CM-1.2 are filled into HTN cells, wherein the cells have a cell thickness of 15 µm and planar polyimide alignment layers.

In the absence of an applied electric field and at temperatures below room temperature and especially below 15°C, in particular at 0°C and -10°C, instead of exhibiting a cholesteric texture the cells have an inhomogeneous appearance with a grainy and pseudo focal conic texture. This can lead to undesirable light leakage in the dark state and thus to a less effective dark state and to a slower switching performance.

### Comparative Example 2

A comparative mixture CM-2 is prepared by mixing 95.377% of mixture H-1 described in Reference Example 1 above with 0.050% of the compound ST-1 as shown in Comparative Example 1 above, 0.473% of the compound D-1 shown in Comparative Example 1 above, 0.970% of the compound D-2 shown in Comparative Example 1 above, 0.819% of the compound D-3 shown in Comparative Example 1 above, 0.683% of the compound of formula 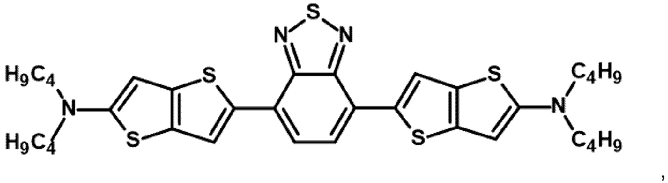 which in the following will be referred to as D-5, and 1.628% of the compound D-9 shown in Comparative Example 1 above.

The mixture CM-2 is filled into two cells, wherein the cells each have a cell thickness of 8 µm and planar polyimide alignment layers. The two cells are arranged as a double cell with a crossed geometry.

At temperatures below 0°C, in particular at -20°C and -30°C, the double cell shows a slow switching performance where the appearance of the transition between the optical states is inhomogeneous or stained.

### Comparative Example 3

A comparative mixture CM-3 is prepared by mixing 94.786% of mixture H-1 described in Reference Example 1 above with 0.061% of the compound ST-1 as shown in Comparative Example 1 above, 0.375% of the compound D-1 shown in Comparative Example 1 above, 1.031% of the compound D-2 shown in Comparative Example 1 above, 1.030% of the compound D-3 shown in Comparative Example 1 above, 1.125% of the compound D-6 shown in Comparative Example 1 above, 0.702% of the compound D-9 shown in Comparative Example 1 above, and 0.890% of the compound D-10 shown in Comparative Example 1 above.

The mixture CM-3 is filled into two cells, wherein the cells each have a cell thickness of 8 µm and planar polyimide alignment layers. The two cells are arranged as a double cell with a crossed geometry.

At temperatures below 0°C, in particular at -20°C and -30°C, the double cell shows a slow switching performance where the appearance of the transition between the optical states is inhomogeneous or stained.

### Comparative Example 4 to 7

Comparative mixtures CM-4, CM-5, CM-6 and CM-7 are prepared and further treated according to Comparative Example 2 above, wherein however instead of mixture H-1 the mixtures H-2, H-3, H-4 and respectively H-5 as described in Reference Examples 2 to 5 above are used.

At low temperatures the cells show a slow switching performance where the appearance of the transition between the optical states is inhomogeneous or stained.

### Example 1

A mixture M-1 is prepared by mixing 90.68% of mixture H-6 described in Reference Example 6 above with 0.10% of the compound ST-1 as shown in Comparative Example 1 above, 1.05% of the compound D-1 shown in Comparative Example 1 above, 1.63% of the compound D-2 shown in Comparative Example 1 above, 2.10% of the compound D-3 shown in Comparative Example 1 above, 1.64% of the compound D-6 shown in Comparative Example 1 above, 0.60% of the compound D-9 shown in Comparative Example 1 above, and 2.20% of the compound D-10 shown in Comparative Example 1 above.

A mixture M-1.1 is prepared by mixing 99.656% of mixture M-1 with 0.344% of the compound of formula R-5011 as described in Table F above.

The mixture M-1.1 is filled into an HTN cell, wherein the cell has a cell thickness of 15 µm and planar polyimide alignment layers.

In the absence of an applied electric field the cell exhibits a cholesteric texture with a homogeneous appearance, also at temperatures well below room temperature and in particular at 0°C, -10°C and -20°C, and has an excellent dark state. The cell has a fast switching performance where the appearance of the transition between the optical states is homogeneous.

### Example 2

A mixture M-2 is prepared by mixing 89.65% of mixture H-7 described in Reference Example 7 above with 0.10% of the compound ST-1 as shown in Comparative Example 1 above, 0.95% of the compound D-1 shown in Comparative Example 1 above, 1.90% of the compound D-2 shown in Comparative Example 1 above, 2.30% of the compound D-3 shown in Comparative Example 1 above, 1.80% of the compound D-6 shown in Comparative Example 1 above, 2.20% of the compound D-9 shown in Comparative Example 1 above, and 1.10% of the compound D-10 shown in Comparative Example 1 above.

A mixture M-2.1 is prepared by mixing 99.618% of mixture M-2 with 0.382% of the compound of formula R-5011 as described in Table F above.

A mixture M-2.2 is prepared by mixing 99.847% of mixture M-2 with 0.153% of the compound of formula R-5011 as described in Table F above.

The mixtures M-2.1 and M-2.2 are filled into HTN cells, wherein the cells have a cell thickness of 15 µm and planar polyimide alignment layers.

In the absence of an applied electric field the cells exhibit a cholesteric texture with a homogeneous appearance, also at temperatures well below room temperature and in particular at 0°C, -10°C and -20°C, and have an excellent dark state. The cells have a fast switching performance where the appearance of the transition between the optical states is homogeneous.

### Example 3

A mixture M-3 is prepared by mixing 94.600% of mixture H-6 described in Reference Example 6 above with 0.050% of the compound ST-1 as shown in Comparative Example 1 above, 0.496% of the compound D-1 shown in Comparative Example 1 above, 0.973% of the compound D-2 shown in Comparative Example 1 above, 0.925% of the compound D-3 shown in Comparative Example 1 above, 1.526% of the compound D-6 shown in Comparative Example 1 above, 0.667% of the compound D-9 shown in Comparative Example 1 above, and 0.763% of the compound D-10 shown in Comparative Example 1 above.

The mixture M-3 is filled into two cells, wherein the cells each have a cell thickness of 8 µm and planar polyimide alignment layers. The two cells are arranged as a double cell with a crossed geometry.

At room temperature and also at temperatures well below room temperature, in particular at -20°C and -30°C, the double cell shows a fast switching performance where the appearance of the transition between the optical states is homogeneous.

### Example 4

A mixture M-4 is prepared by mixing 95.377% of mixture H-8 described in Reference Example 8 above with 0.050% of the compound ST-1 as shown in Comparative Example 1 above, 0.473% of the compound D-1 shown in Comparative Example 1 above, 0.970% of the compound D-2 shown in Comparative Example 1 above, 0.819% of the compound D-3 shown in Comparative Example 1 above, 0.683% of the compound D-5 shown in Comparative Example 2 above, and 1.628% of the compound D-9 shown in Comparative Example 1 above.

The mixture M-4 is filled into two cells, wherein the cells each have a cell thickness of 8 µm and planar polyimide alignment layers. The two cells are arranged as a double cell with a crossed geometry.

At room temperature and also at temperatures well below room temperature, in particular at -20°C and -30°C, the double cell shows a fast switching performance where the appearance of the transition between the optical states is homogeneous.

### Example 5

A mixture M-5 is prepared by mixing 94.90% of mixture H-6 described in Reference Example 6 above with 0.52% of the compound D-1 shown in Comparative Example 1 above, 1.02% of the compound D-2 shown in Comparative Example 1 above, 0.97% of the compound D-3 shown in Comparative Example 1 above, 1.22% of the compound D-6 shown in Comparative Example 1 above, 0.81% of the compound D-9 shown in Comparative Example 1 above, and 0.56% of the compound D-10 shown in Comparative Example 1 above.

The mixture M-5 is filled into two cells, wherein the cells each have a cell thickness of 8 µm and planar polyimide alignment layers. The two cells are arranged as a double cell with a crossed geometry.

At room temperature and also at temperatures well below room temperature, in particular at -20°C and -30°C, the double cell shows a fast switching performance where the appearance of the transition between the optical states is homogeneous.

### Examples 6, 7 and 8

Mixtures M-6, M-7 and M-8 are prepared and further treated according to Example 5 above, wherein however instead of mixture H-6 the mixtures H-9, H-10 and respectively H-11 as described in Reference Examples 9, 10 and 11 above are used.

At low temperatures the cells show a fast switching performance where the appearance of the transition between the optical states is homogeneous.

### Examples 9

A mixture M-9 is prepared by mixing 91.68% of mixture H-12 described in Reference Example 12 above with 0.67% of the compound D-1, 1.50% of the compound D-2, 2.23% of the compound D-3, 1.75% of the compound D-6, 0.64% of the compound D-9, 1.14% of the compound D-10, 0.09% of the compound ST-1 and 0.30% of the compound of formula R-5011.

The mixture M-9 is filled into an HTN cell, wherein the cell has a cell thickness of 15 µm and planar polyimide alignment layers.

The cell exhibits an excellent dark state with a homogeneous appearance, and it has a fast switching performance where the appearance of the transition between the optical states is homogeneous.

### Examples 10

A mixture M-10 is prepared by mixing 91.67% of mixture H-13 described in Reference Example 13 above with 0.67% of the compound D-1, 1.50% of the compound D-2, 2.23% of the compound D-3, 1.75% of the compound D-6, 0.64% of the compound D-9, 1.14% of the compound D-10, 0.09% of the compound ST-1 and 0.31% of the compound of formula R-5011.

The mixture M-10 is filled into an HTN cell, wherein the cell has a cell thickness of 15 µm and planar polyimide alignment layers.

The cell exhibits an excellent dark state with a homogeneous appearance, and it has a fast switching performance where the appearance of the transition between the optical states is homogeneous.

### Examples 11

A mixture M-11 is prepared by mixing 95.007% of mixture H-14 described in Reference Example 14 above with 0.883% of the compound D-1, 0.817% of the compound D-2, 0.990% of the compound D-3, 1.500% of the compound D-6, 0.572% of the compound D-9, 0.181% of the compound D-10 and 0.050% of the compound ST-1.

The mixtures M-1 to M-11 are well suited for the use in devices for regulating the passage of energy from an outside space into an inside space, for example in windows, especially also at lower temperatures.

## Claims

1. A liquid-crystalline medium, comprising
- one or more compounds of formula I 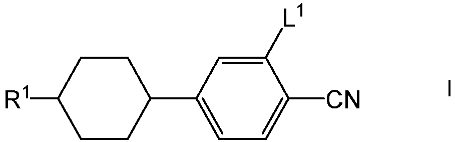 wherein
R¹ denotes a straight-chain alkyl having 8 to 20 C atoms, or a branched or cyclic alkyl having 3 to 20 C atoms, in which, in addition, one or more non-adjacent CH₂ groups may each be replaced, independently of one another, by O and in which, in addition, one or more H atoms may be replaced by F, Cl or Br,
and
L¹ denotes H, F, Cl or CH₃,
and
- one or more dichroic dyes,
wherein the one or more dichroic dyes are contained in the medium in an amount of 1% by weight or more.

2. The liquid-crystalline medium according to claim 1, wherein the one or more dichroic dyes are contained in the medium in an amount of 2% by weight or more, preferably 3% by weight or more, more preferably 4% by weight or more, even more preferably 5% by weight or more, and in particular 7.5% by weight or more.

3. The liquid-crystalline medium according to claim 1 or 2, wherein R¹ denotes a straight-chain alkyl having 8 to 12 C atoms, preferably a straight-chain alkyl having 8 to 10 C atoms,
and/or
L¹ is H or CH₃, preferably H.

4. The liquid-crystalline medium according to one or more of claims 1 to 3, wherein the medium comprises one or more chiral compounds, preferably one or more chiral dopants,
more preferably a chiral compound of the following formula 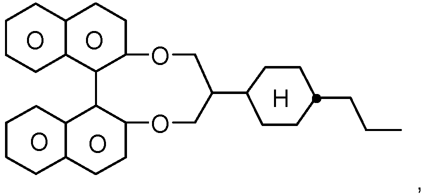 in particular the R-stereoisomer.

5. The liquid-crystalline medium according to one or more of claims 1 to 4, wherein the medium has a positive dielectric anisotropy Δε
and/or
an optical anisotropy Δn at 589 nm of 0.04 or more.

6. The liquid-crystalline medium according to one or more of claims 1 to 5, wherein the medium comprises one or more compounds selected from the group of compounds of formulae III, IV and V 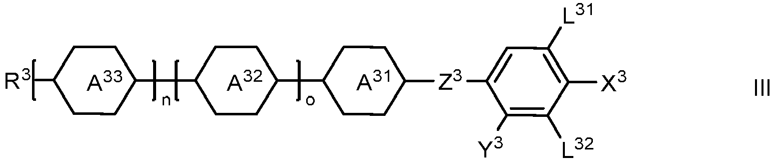 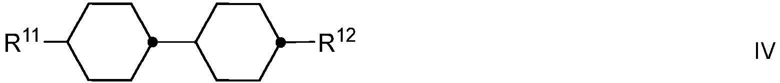 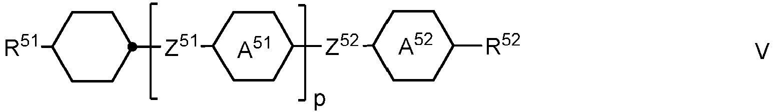 in which
R³ denotes a straight-chain or branched alkyl or alkoxy radical that is unsubstituted or halogenated and has 1 to 15 C atoms, where one or more CH₂ groups in these radicals may each be replaced, independently of one another, by 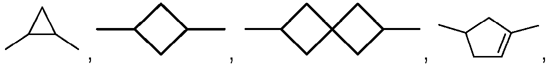 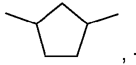 -C≡C-, -CF₂O-, -CH=CH-, -O-, -CO-O- or -O-CO- in such a way that O atoms are not linked directly to one another, 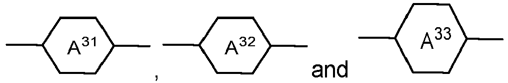 independently of one another, denote 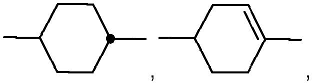 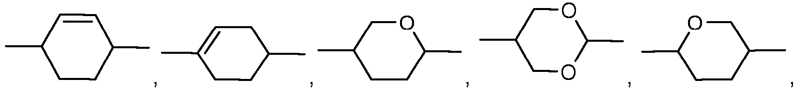 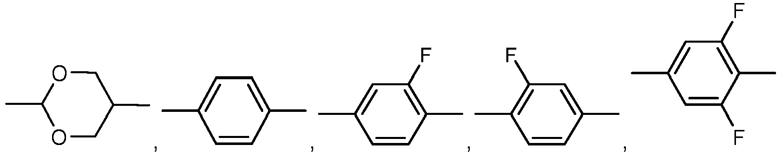 or 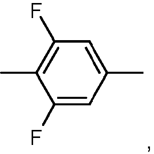
L³¹ and L³² independently of each other, denote H or F,
Y³ denotes H or CH₃,
X³ denotes halogen, halogenated alkyl or halogenated alkoxy with 1 to 3 C atoms or halogenated alkenyl or halogenated alkenyloxy with 2 or 3 C atoms,
Z³ denotes -CH₂CH₂-, -CF₂CF₂-, -COO-, *trans-* -CH=CH-, trans-CF=CF-, -CH₂O- or a single bond, preferably a single bond,
n and o are, independently of each other, 0 or 1,
R¹¹ denotes a straight-chain alkyl radical having 1 to 12 C atoms or a branched or cyclic alkyl radical having 3 to 12 C atoms, or a straight-chain alkenyl radical having 2 to 12 C atoms or a branched alkenyl radical having 3 to 12 C atoms or a cyclic alkenyl radical having 5 to 12 C atoms, wherein one or more H atoms are optionally replaced by fluorine,
R¹² denotes a straight-chain alkyl or alkoxy radical having 1 to 12 C atoms or a branched or cyclic alkyl or alkoxy radical having 3 to 12 C atoms, or a straight-chain alkenyl radical having 2 to 12 C atoms or a branched alkenyl radical having 3 to 12 C atoms or a cyclic alkenyl radical having 5 to 12 C atoms, wherein one or more H atoms are optionally replaced by fluorine,
R⁵¹, R⁵² independently of one another, denote alkyl having 1 to 7 C atoms, alkoxy having 1 to 7 C atoms, or alkoxyalkyl, alkenyl or alkenyloxy having 2 to 7 C atoms, identically or differently, denote 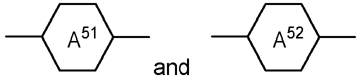 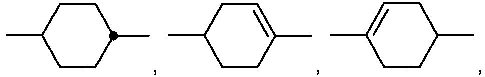 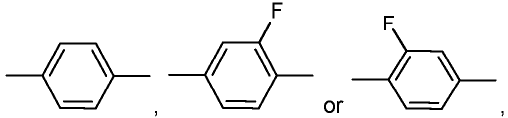
Z⁵¹ and Z⁵² independently of one another, denote -CH₂-CH₂-, -CH₂-O-, -CH=CH-, -C=C-, -COO- or a single bond, and
p is 1 or 2.

7. The liquid-crystalline medium according to one or more of claims 1 to 6, wherein the medium comprises one or more compounds of formula III-a 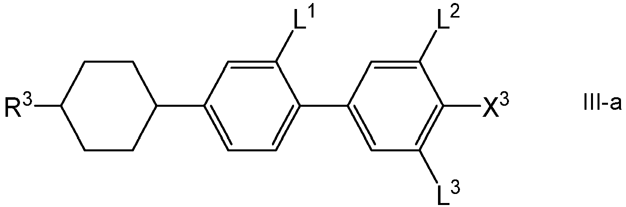 wherein
L¹, L² and L³ denote, independently of one another, H or F, and
R³ and X³ have the meanings as set forth in claim 6.

8. The liquid-crystalline medium according to one or more of claims 1 to 7, wherein the medium comprises one or more, preferably two or more, of the compounds of formulae I-1, I-2 and I-3

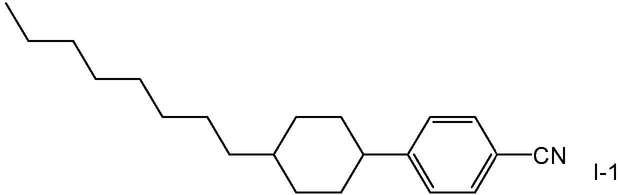

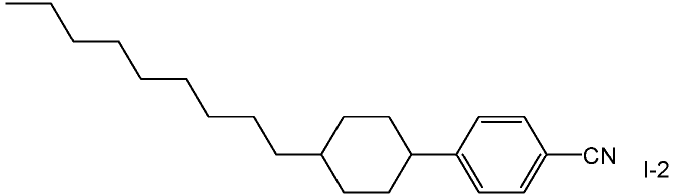

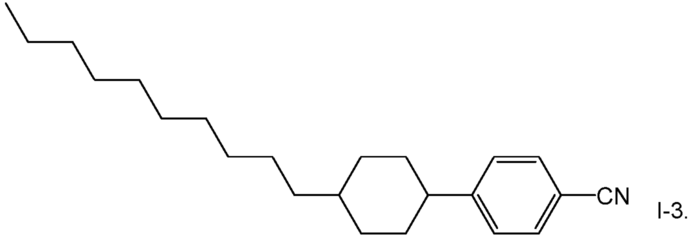

9. The liquid-crystalline medium according to one or more of claims 1 to 8, wherein the medium does not comprise any compounds of formula I-A 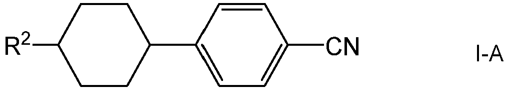
or contains the compounds of formula I-A in a total amount of 2% by weight or less, preferably 1% by weight or less,
wherein R² denotes a straight-chain alkyl having 1 to 6 C atoms, preferably a straight-chain alkyl having 1 to 5 C atoms.

10. The liquid-crystalline medium according to one or more of claims 1 to 9, wherein the one or more dichroic dyes have a chromophore group which comprises a substituted phenylene or at least two fused rings wherein at least one of the fused rings is an unsubstituted or substituted phenylene,
wherein preferably the one or more dichroic dyes are selected from benzothiadiazoles and thiadiazoloquinoxalines.

11. The liquid-crystalline medium according to one or more of claims 1 to 10, wherein the medium contains the one or more compounds of formula I in a total amount of 3% by weight or more, preferably 5% by weight or more, more preferably 10% by weight or more, and in particular 15% by weight or more.

12. The liquid-crystalline medium according to one or more of claims 1 to 11, wherein the medium comprises one or more stabilizers, preferably two or more stabilizers, and/or one or more polymerisable compounds, preferably one or more polmyerisable mesogenic compounds.

13. A switching element, comprising a switching layer comprising the liquid-crystalline medium according to one or more of claim 1 to 12, wherein the switching layer is arranged between two substrates and wherein alignment layers are provided which are in direct contact with the liquid-crystalline medium.

14. The switching element according to claim 13, wherein in at least one switching state the switching layer has a twisted, supertwisted or highly twisted nematic configuration, preferably a highly twisted nematic configuration.

15. The switching element according to claim 13, wherein in a switching state the switching layer has a non-twisted nematic configuration wherein the liquid-crystalline medium has a positive dielectric anisotropy and a homogeneous alignment.

16. The switching element according to one or more of claims 13 to 15, wherein the switching element comprises two switching layers comprising the liquid-crystalline medium according to one or more of claim 1 to 12.

17. A window element, comprising the liquid-crystalline medium according to one or more of claims 1 to 12 or the switching element according to one or more of claims 13 to 16.
